# EUROPEAN PATENT APPLICATION

(11) **EP 4 498 244 A1**
(43) Date of publication of application: **29.01.2025**
(21) Application number: 23177307.8
(22) Date of filing: 05.06.2023
(51) Int. Cl.: G06F 9/50

(54) **SYNTHETIC GROUPING OF PROCESSING TASKS**

(71) Applicant: Barclays Execution Services Limited, London E14 5HP (GB)
(72) Inventor: VERNEKAR, Pralhad Vishnu, 411007 Pune (IN); DEODHAR, Anirudha, 411021 Pune (IN); GARWARE, Rahul Arun, 411057 Pune (IN)
(74) Representative: Carpmaels & Ransford LLP

(57) **Abstract**

A computer-implemented method for reducing processor cycles when performing a set of processing tasks, the set of processing tasks involving transforming a set of discrete inputs to a set of discrete outputs, the method comprising: identifying a unique input value from the set of discrete inputs among the set of processing tasks; performing the processing task with the unique input value to generate a discrete output; and assigning the discrete output to the processing tasks of the set of processing tasks having the same discrete input as the unique input value. Preferably, the processing tasks are assigned to a plurality of synthetic groups. The method may be used for batch processing and/or may be implemented in a cloud computing environment.

## Description

### Technical Field

The present invention relates to performing a set of processing tasks. In particular, the present invention relates to a computer-implemented method, a computing system, a cloud computing environment and a computer program for reducing processor cycles when performing a set of processing tasks that involve transforming a set of discrete inputs to a set of discrete outputs.

### Background

Software performance patterns are a set of techniques implemented in software and/or hardware that are used to improve the performance of software for many different applications. Performance patterns can help to optimise the use of computer resources such as memory, processor, and network bandwidth, as well as reduce response times and improve scalability.

Known examples of software performance patterns include caching, lazy loading, batch processing, compression, minimising locking, asynchronous processing, and many more. For instance, caching involves storing frequently used data in a fast, easily accessible location, such as memory, to reduce the need to retrieve the data from a slower storage location every time the data is used. Lazy loading involves only loading the data that is required in the moment, rather than loading all data upfront, which can be useful for reducing memory usage and improving response times. In batch processing, a large amounts of data is processed in (small) batches, rather than processing it all at once. This can help to reduce the amount of memory used and improve scalability. Compression involves reducing the size of data before performing further processing, for example before transmitting it over a network in order to reduce the amount of bandwidth used. Minimising locking involves reducing the use of locks in multi-threaded applications, in order to avoid contention and improve performance. In asynchronous processing, non-blocking I/O, multithreading or message passing is used to perform parallel computing tasks, rather than sequential computing tasks.

However, further performance patterns are required for improving the performance (for example, the number of processing cycles used) of processing tasks which involve transforming a set of discrete inputs to a set of discrete outputs. Such performance patterns have particular use in cloud computing environments, where the performance dictates the amount of computer resources of the cloud computing environment that are made available for performing the processing tasks, as well as outside of cloud computing environments.

### Summary

The present invention is defined by the independent claims, with further optional features being defined by the dependent claims.

In a first aspect of the invention, there is provided a computer-implemented method for performing a set of processing tasks, the set of processing tasks involving transforming a set of discrete inputs to a set of discrete outputs, the method comprising: identifying a unique input value from the set of discrete inputs among the set of processing tasks; performing the processing task with the unique input value to generate a discrete output; and assigning the discrete output to the processing tasks of the set of processing tasks having the same discrete input as the unique input value. In this way, the processing task only needs to be performed for the unique input values of the set of processing tasks, rather than for all discrete inputs. This considerably reduces the number of processing cycles used to perform the set of processing tasks as the core logic of the processing tasks (e.g. implemented in Java, C#, or the like), which is used to perform the processing tasks, is far more computationally intensive than other steps of the method, which involve straightforward manipulation of a dataset (e.g. using SQL and a relational database).

In embodiments, the method further comprises identifying a second unique input value from the set of discrete inputs among the set of processing tasks; performing the processing task with the second unique input value to generate a second discrete output; and assigning the second discrete output to the processing tasks of the set of processing tasks having the same discrete input as the second unique input value. In other embodiments, the method further comprises identifying an nth unique input value from the set of discrete inputs among the set of processing tasks; performing the processing task with the second unique input value to generate an nth discrete output; and assigning the nth discrete output to the processing tasks of the set of processing tasks having the same discrete input as the nth unique input value. By using multiple discrete inputs in this way, the number of processing cycles can be reduced further, especially for datasets where there are many repeated input values in the set of discrete inputs.

In embodiments, the set of processing tasks are performed as a batch. In such embodiments, the batch may be run at a specific time or in response to a specific event. The invention is particularly effective when the processing tasks are performed as a batch, and a plurality of batches are processed, as the possible unique input values (which each correspond to a possible synthetic group of discrete inputs) can be generalised across the batches. This means processing relating to identifying the possible unique input value only needs to be performed once, regardless of the number of batches.

Preferably, each discrete input comprises a plurality of input attributes. The benefit in terms of processing cycles of using synthetic groups is more readily apparent when there is a plurality of input attributes as having a plurality of input attributes means that the core logic that is used to perform the processing task is more likely to be highly complex, and therefore require more processing cycles to be performed once. In such embodiments, the method may further comprise, prior to identifying the unique input value from the set of discrete inputs, generating at least one of the plurality of input attributes. For example, generating at least one of the plurality of input attributes may comprise transforming a continuous input attribute to a discrete input attribute. In this way, the methods of the invention may be applied to some continuous input attributes as well as discrete input attributes, and therefore may have more versatile applications.

In embodiments where each discrete input comprises a plurality of input attributes, the unique input value may be a particular group of input attribute values across the plurality of input attributes. In such embodiments, the particular group of input attribute values may comprise an input attribute value for each of the plurality of input attributes. Alternatively (and preferably), the particular group of input attribute values may comprise an input attribute value for a reduced group of input attributes of the plurality of input attributes. Using a reduced group of input attributes means that the total number of possible synthetic groups is lower, which makes using synthetic groups more effective since for each synthetic group the core logic of the processing task has to be performed only once. In such embodiments, the reduced group of input attributes may be identified using principal component analysis. Principal component analysis is particularly effective at reducing the dimensionality of the input dataset so that fewer synthetic groups are identified from the input dataset, thereby increasing the extent to which the processor cycles are reduced.

In embodiments, identifying a unique input value from the set of discrete inputs among the set of processing tasks comprises identifying a plurality of unique input values from the set of discrete inputs among the set of processing tasks. In such embodiments, performing the processing task with the unique input value to generate a discrete output may be performed for each of the plurality of unique input values. Additionally, in such embodiments, assigning the discrete output to the processing tasks of the set of processing tasks having the same discrete input as the unique input value may be performed for each of the plurality of unique input values.

In embodiments, the method further comprises: recording the number of processor cycles to complete the set of processing tasks; estimating the number of processor cycles to complete the set of processing tasks by multiplying the number of processor cycles to perform the processing task with the unique input value to generate a discrete output by the number of processing tasks; and outputting the difference between the recorded number of processor cycles and the estimated number of processor cycles. The outputted difference provides an indication of the reduction in processor cycles by using synthetic groups. In such embodiments, the method may further comprise using the outputted difference to inform a reduced group of input attributes of the plurality of input attributes identified using principal component analysis.

In embodiments, the set of discrete inputs is stored in an input dataset, each discrete input value of the set of discrete inputs forming a different row or column of the input dataset. In such embodiments, the set of discrete outputs may be stored in an output dataset, each discrete output of the set of discrete outputs forming a different row or column of the output dataset. This allows for many of the steps of the method to be performed using database manipulation, such as using SQL, which is much less computationally intensive than other programming language such as Java. Additionally, in such embodiments, assigning the discrete output to the processing tasks of the set of processing tasks having the same discrete input as the unique input value may comprise selecting any rows or columns of the input dataset having the same discrete input as the unique input value, and setting the corresponding rows or columns in the output dataset to the discrete output. In such embodiments, the input dataset and/or the output dataset may be embodied in a relational database. In some such embodiments, the relational database may use composite indexes. Composite indexes are particularly effective when there is a plurality of input attributes in the discrete inputs to sort through and select a particular group of input attributes (i.e. a unique input value).

In embodiments, the method is implemented as an application program stored on a computer readable storage media of a computing system. This allows the method to be applied to any input dataset on the computing system, typically on request of the user of the computing system.

In a second aspect of the invention, there is provided an application program stored on a computer readable storage media of a computing system, the computing system having a processor, the application program having instructions to cause the processor to perform the aforementioned method.

In embodiments, the method is implemented in an operating system stored on a system memory of a computing system. This allows the method to be automatically applied in the processing task performed by the computing system, without a request from the user of the computing system.

In a third aspect of the invention, there is provided an operating system stored on a system memory of a computing system, the computing system having a processor, the operating system having instructions to cause the processor to perform the aforementioned method.

In a fourth aspect of the invention, there is provided a computing system comprising the aforementioned application program or the aforementioned operating system.

In embodiments, the method is implemented in a cloud computing environment. The internal workings of cloud computing environments make them particularly suitable for implementing methods of the invention. In particular, the processing cycles used in processing tasks performed in cloud computing environments, particularly third party cloud computing environments such as Amazon Web Services (AWS), are already accurately measured to determine what computing resource are to be made available for performing certain processing tasks (for example, the set of processing tasks according to the invention). Reducing the processing cycles used to perform a set of processing tasks, as is the advantage of the methods of the invention, therefore results in fewer computing resources needing to be made available by the third-party cloud environment.

In such embodiments, the method may further comprise, prior to identifying a unique input value: analysing the set of discrete inputs and the set of discrete outputs of the set of processing tasks; analysing the computer code that is configured to execute the set of processing tasks; executing the computer code to perform the set of processing tasks and analysing the execution of the computer code; and outputting restructured computer code based on the analyses. In embodiments, the restructured computer code comprises: a synthetic groups creation layer determined by analysing the set of discrete inputs and the set of discrete outputs of the set of processing tasks, analysing the computer code that is configured to execute the set of processing tasks, and executing the computer code to perform the set of processing tasks and analysing the execution of the computer code; a core functionality layer determined by analysing the computer code; and a post-processing layer determined by analysing the set of discrete inputs and the set of discrete outputs of the set of processing tasks, analysing the computer code that is configured to execute the set of processing tasks, and executing the computer code to perform the set of processing tasks and analysing the execution of the computer code. In further embodiments, the restructured computer code comprises: a pre-processing layer determined by analysing the computer code that is configured to execute the set of processing tasks. In further embodiments, the restructured computer code comprises: an observability layer determined by executing the computer code to perform the set of processing tasks and analysing the execution of the computer code. In such embodiments, the restructured computer code may be used for processing the set of processing tasks. In this way, a cloud computing environment is able to analyse whether synthetic groups are suitable for reducing the number of processor cycles used for performing the set of processing tasks, and then output changes to the code to benefit further sets of processing tasks.

In example embodiments, executing the computer code to perform the set of processing tasks and monitoring performance of the executing comprises recording the number of processor cycles to complete the set of processing tasks. Additionally, in such embodiments, executing the computer code to perform the set of processing tasks and monitoring performance of the executing further comprises identifying the number of unique input values from the set of discrete inputs among the set of processing tasks. Further, in such embodiments, herein executing the computer code to perform the set of processing tasks and monitoring performance of the executing further comprises: estimating the number of processor cycles to complete the set of processing tasks when only performing the processing task for the number of unique input values; and outputting the difference between the recorded number of processor cycles and the estimated number of processor cycles to a user. In this way, a cloud computing environment is able to indicate to a user whether it is possible to reduce the number of processor cycles used for performing a set of processing tasks.

In a fifth aspect of the invention, there is provided a cloud computing environment having a processor configured to perform the method.

### Brief Description of the Drawings

Embodiments of the invention are described below, by way of example, with reference to the following drawings, in which:
Fig. 1 shows a flow diagram of a method of the invention.
Fig. 2 shows an implementation of the method of the invention.
Fig. 3A shows a computing device in which the methods of the invention may be implemented. Fig. 3B shows components of the system memory of the computing device of

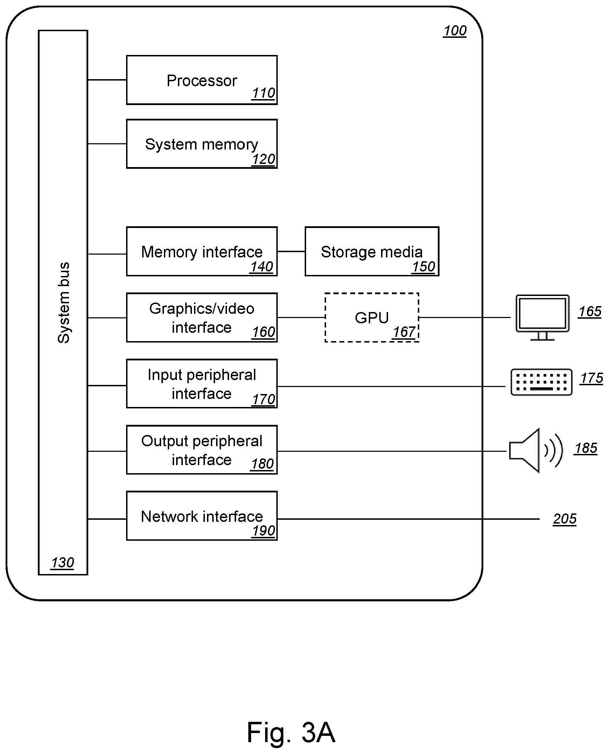

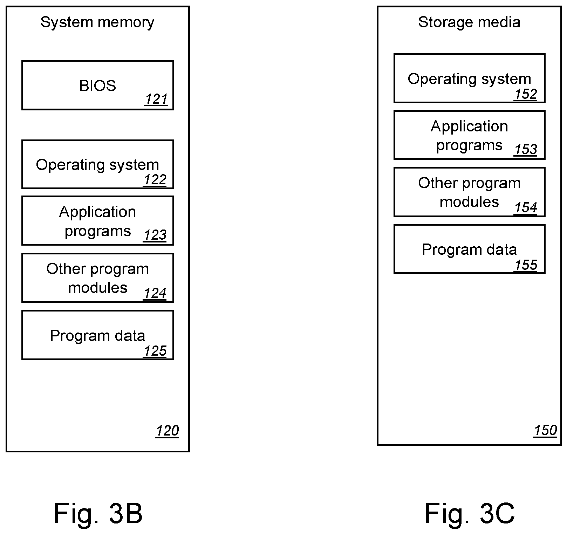

Fig. 3A in further detail. Fig. 3C shows components of the storage media of the computing device of Fig. 3A.

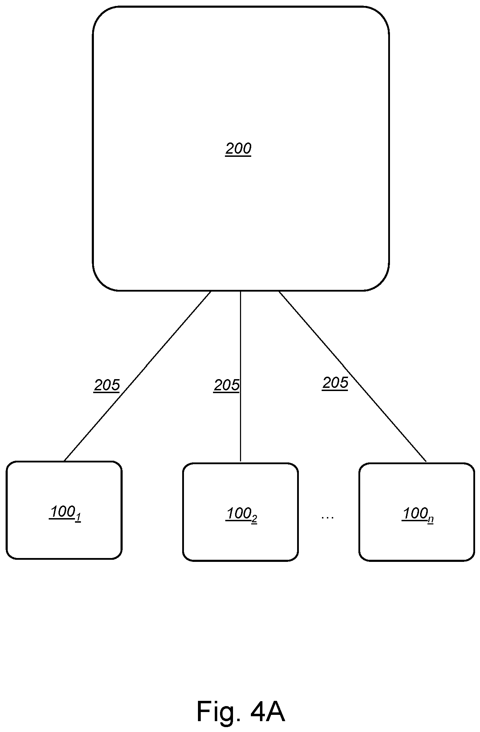

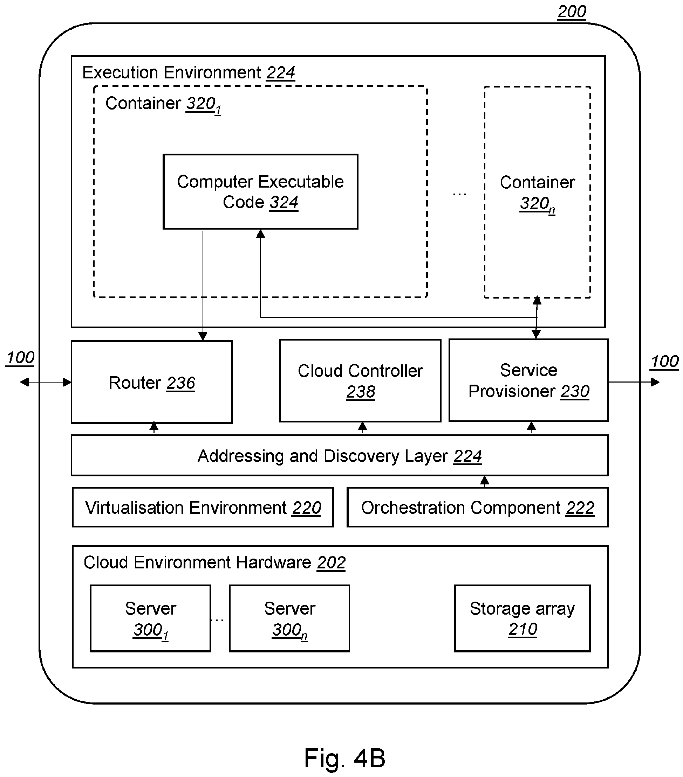

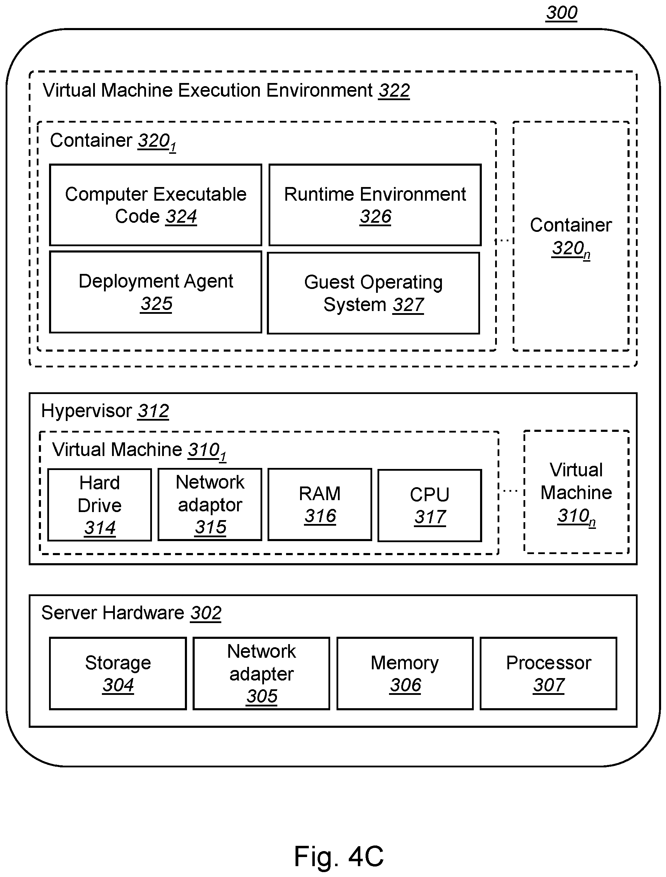

Fig. 4A shows a cloud computing environment in which the methods of the invention may be implemented. Fig. 4B and Fig. 4C show further components of the cloud computing environment.

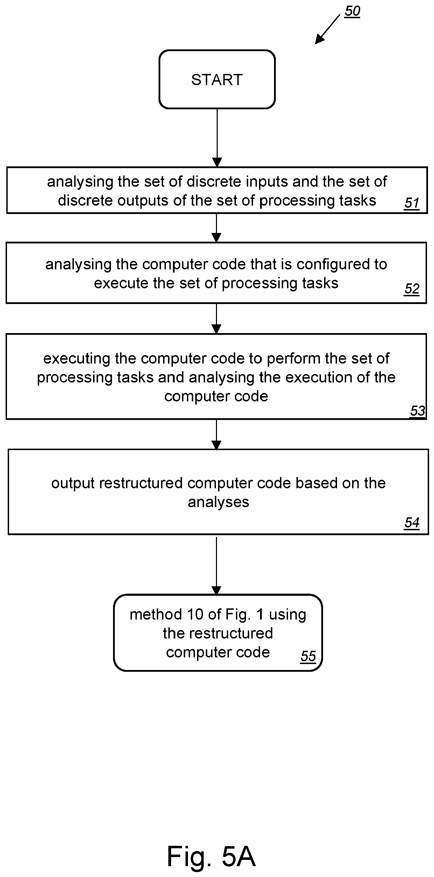

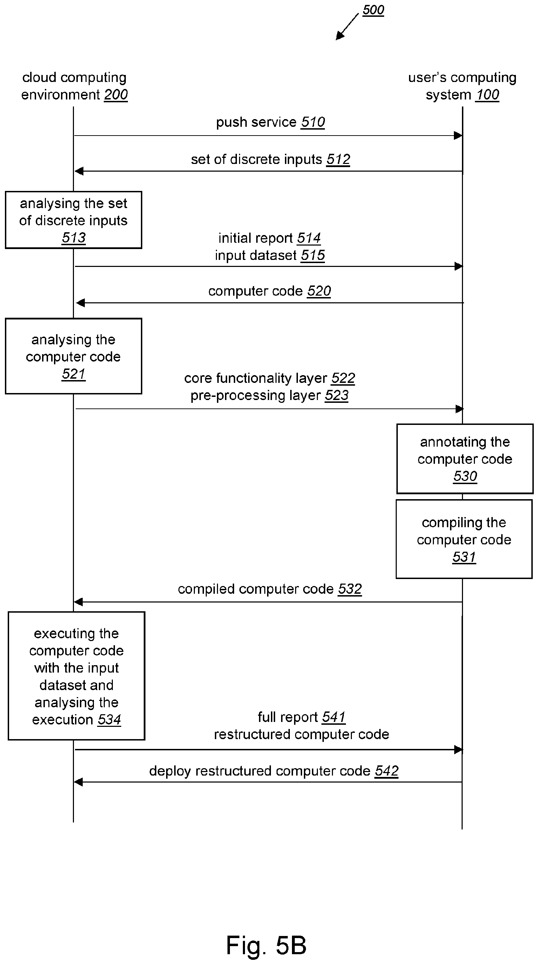

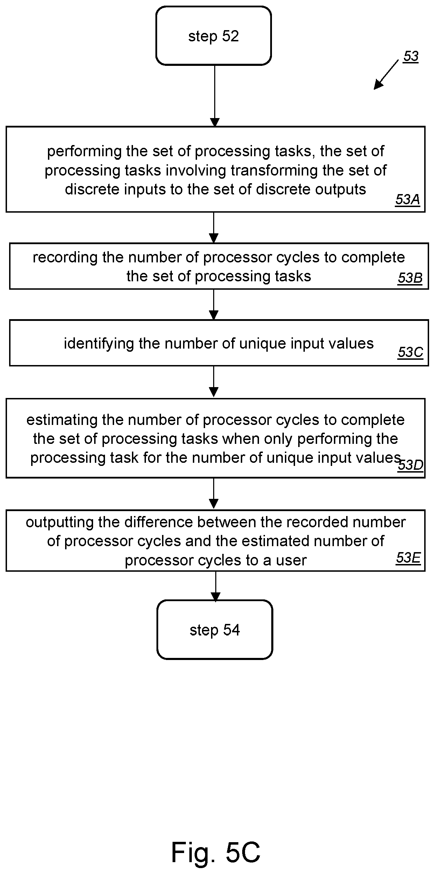

Fig. 5A shows a flow diagram of a further method of the invention when implemented in a cloud computing environment. Fig. 5B shows a more detailed flow diagram of the further method of the invention when implemented in a cloud computing environment. Fig. 5C shows a flow diagram of a further method of the invention for implementing one of the steps in Fig. 5A.

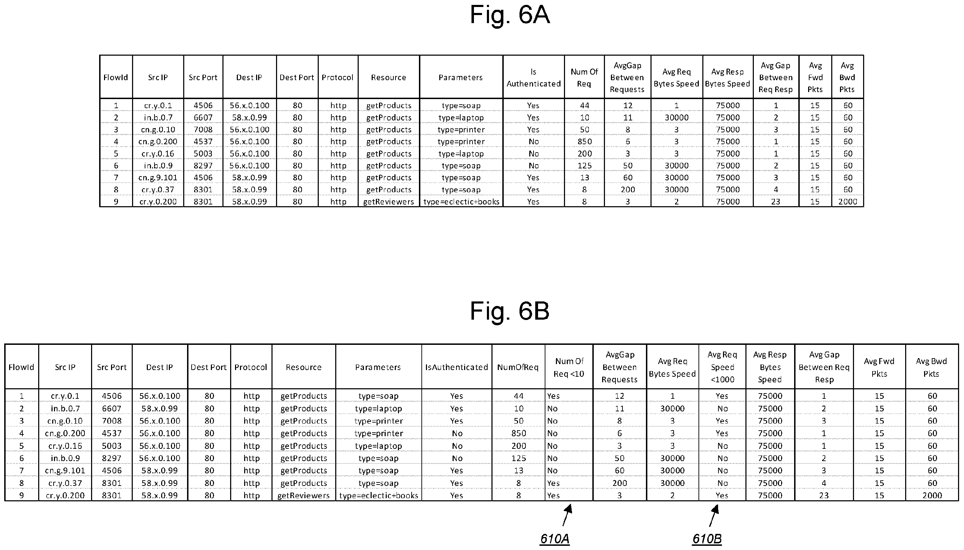

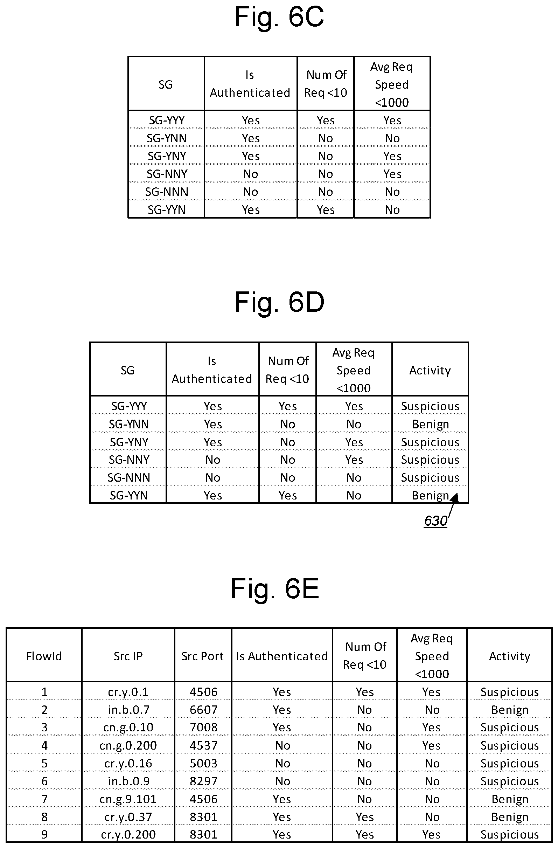

Fig. 6A, 6B, 6C, 6D and 6E show data structures that are generated according to the method of the invention in a first example implementation.

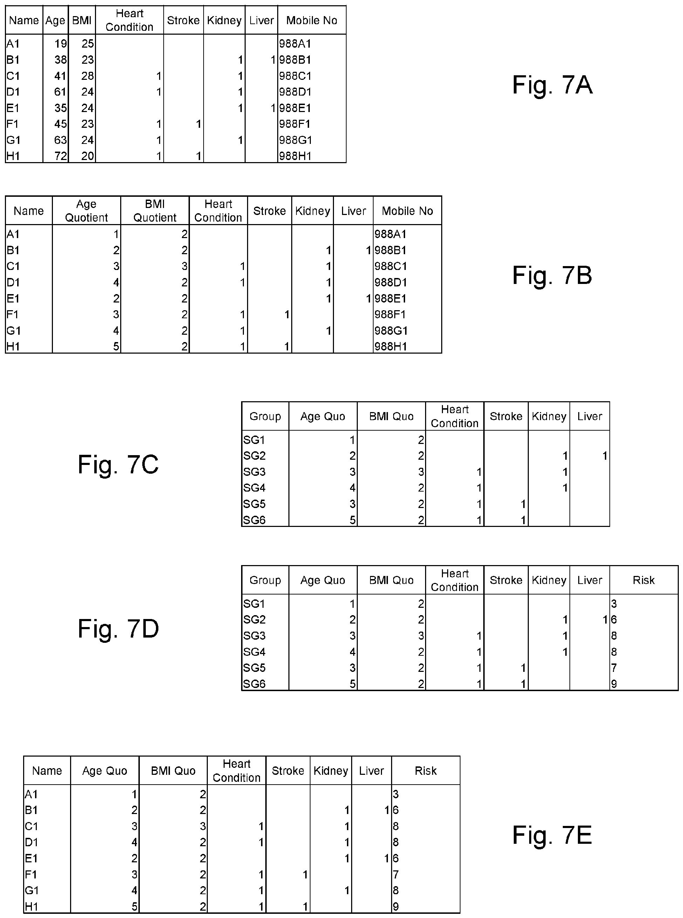

Fig. 7A, 7B, 7C, 7D and 7E show data structures that are generated according to the method of the invention in a second example implementation.

### Detailed Description

In the context of software, 'performance' refers to how well software performs in terms of its ability to efficiently use computer resources such as memory, processor, and network bandwidth, and its ability to respond quickly to user requests. Performance may also refer to the scalability of a system, which is its ability to handle increased loads and numbers of users without a significant decrease in performance. Some of the key metrics that are used to measure the performance of software include:
- Response time: The time it takes for a system to respond to a user request
- Throughput: The number of requests that a system can handle per unit of time
- Latency: The time it takes for a request to be processed and a response to be returned
- Memory usage: The amount of memory used by the system
- Processor usage: The amount of processor resources used by the system. For a given processor, this may be measured in processor cycles. A processor cycle is also referred to in the art as a fetch-decode-execute cycle.

Performance may be affected by a number of factors such as the hardware on which the software is running, the network conditions, the number of users, the usage patterns, and the like. However, with all these factors being equal, there are still techniques that can be applied for improving the performance of software, i.e. software performance patterns.

The invention focuses on reducing processor cycles when performing a set of processing tasks that involve transforming a set of discrete inputs to a set of discrete outputs. As discussed herein, such methods may be implemented in various ways, including at the operating system level within a computing system and in a cloud computing environment. Additionally, such methods find application to various rules-based systems in which a set of discrete inputs is transformed to a set of discrete outputs, including to Denial of Service (DoS) attack prevention and health records, as discussed further herein.

### Overview of Method

In order to reduce processor cycles when performing a set of processing tasks that involve transforming a set of discrete inputs to a set of discrete outputs, the methods of the invention identify synthetic groups from the discrete inputs of the processing tasks. The term `synthetic group', as used herein, refers to one or more discrete inputs that are artificially grouped together. Synthetic groups are dynamically determined based on the discrete inputs of the processing tasks in the set of processing tasks, as discussed further herein.

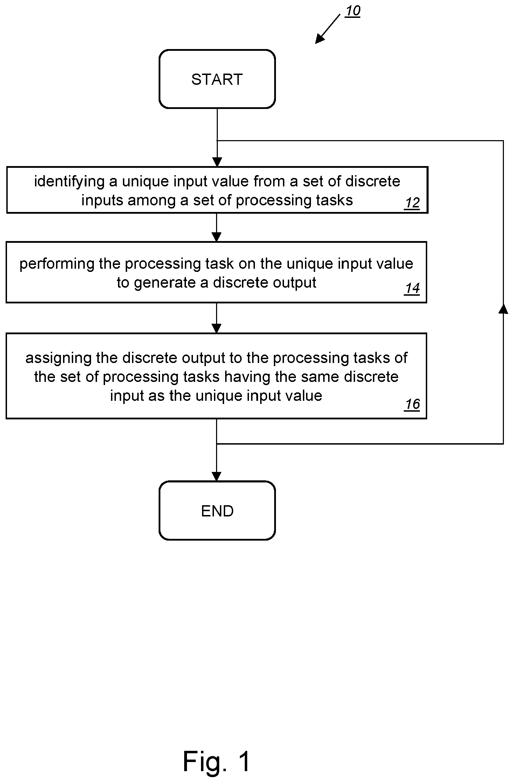

Fig. 1 shows a computer-implemented method 10 for reducing processor cycles when performing a set of processing tasks, the set of processing tasks involving transforming a set of discrete inputs to a set of discrete outputs. As shown in Fig. 1, the method 10 comprises the following steps:
identifying a unique input value from the set of discrete inputs among the set of processing tasks (step 12);
performing the processing task with the unique input value to generate a discrete output (step 14); and
assigning the discrete output to the processing tasks of the set of processing tasks having the same discrete input as the unique input value (step 16).

As mentioned, the set of processing tasks involve transforming a set of discrete inputs to a set of discrete outputs. The term "discrete", as used herein, simply means not continuous. Put another way, a discrete input is an input that has a finite number of options. For instance, a set of discrete inputs may be the options "Yes, No", but not all numbers. In another example, a set of discrete inputs may be the numbers "1, 2, 3, 4" but not the numbers "1.0123, 2.01, 3.3333333, 4" any all numbers therebetween. Typically, the set of processing tasks are performed as a batch, and the batch is run at a specific time or in response to a specific event, depending on the application to which the method is applied. For instance, the batch may be run once per day in certain applications. As another example, the batch may be run in response to a user request or in response to an automatic trigger by a wider system.

Each of the set of processing tasks in the set involves transforming one of the set of discrete inputs to one of the set of discrete outputs. In order to make such a transformation, there is an underlying set of rules or rules-based system that maps the discrete inputs of the set to the discrete outputs of the set. Each processing task therefore involves executing the underlying set of rules with the discrete input of the particular processing task as input to determine the discrete output. Whilst in some instances such a processing task may be relatively computationally efficient in isolation, when processing sets of such processing tasks, particularly large sets (e.g. 1,000+ processing tasks), the overall software performance may be poor. For instance, although an individual processing task may only take 1000 processor cycles to complete, if there are 1,000 processing tasks in the batch, then the total number of processing cycles is 1,000,000. Moreover, if there are 500,000 processing tasks in the batch (which is not unrealistic for certain applications), then the total number of processing cycles is 500,000,000. With batch processing, such as daily batch processing, a high number of processing cycles like this can make it difficult to complete the set of processing tasks before the next batch of processing tasks needs to be started. Conventionally, this would mean additional and/or better processing hardware is needed to ensure that the batch processing completes in time. However, with the methods of the present invention, there is no need for additional and/or better processing hardware to be used.

In step 12 of Fig. 1, at least one unique input value is identified from the set of discrete inputs. In this context, a "unique input value" is a value that appears in one or more of the set of discrete inputs. For example, consider the following set of discrete input values: 1, 2, 1, 3, 2, 2, 2, 2, 1, 3, 2, 1, 1, 3, 2, 1, 4, 2, 2, 1, 1, 1, 1, 2, 1, 1, 1, 2, 2, 2. The unique input values of this set of discrete input values are 1, 2, 3, and 4. Unique input values may be identified from the set of discrete input values using a method known in the art. For instance, in SQL, the command SELECT DISTINCT identifies unique values. Each unique input value may be used to form a synthetic group. Each synthetic group may correspond to one or more discrete inputs of the set of discrete inputs. For instance, in the aforementioned example, the synthetic group with unique input value "1" corresponds to the following underlined discrete inputs 1, 2, 1, 3, 2, 2, 2, 2, 1, 3, 2, 1, 1, 3, 2, 1, 4, 2, 2, 1, 1, 1, 1, 2, 1, 1, 1, 2, 2, 2.

It should be noted that the term "value", as used herein, is used to distinguish between a category of data and the actual content or information associated with that category. Accordingly, for "input" for example, "input" describes a category or label that organise and group related data, while an "input value" represents the specific pieces of information that are associated with each category or label. In essence, an "input" serves as a way to categorise and group data (e.g. like a header of a table), while "input values" provide the actual content or information that falls within each category (e.g. the rows under the header of the table).

In some embodiments, as further discussed herein, the discrete inputs may comprise a plurality of input attributes. The input attributes can be thought of as sub-inputs of each of the discrete inputs. For example, a discrete input may be the vector a*i* + b*j* + c*k*, in which case the input attributes are *i*, *j*, and *k*, respectively. As shown by this example, input attributes also have their own attribute values. For example, for the input value 1*i* + 2*j* + 3*k*, the attribute value of the *i* vector is 1. The unique input value represents a particular group of input attribute values. Like the discrete inputs, each of the input attributes should be discrete. In some instances, continuous input attributes may be converted to discrete attributes, as discussed further herein.

In embodiments where the discrete inputs comprise a plurality of input attributes, the unique input values, i.e. the particular groups of input attribute values, are identified by determining all unique groups (i.e. combinations) of input attribute values. For instance, consider a set of discrete inputs that have a first input attribute with 4 unique input attribute values, a second input attribute with 6 unique input attribute values, and a third input attribute with 10 unique input attribute values. The total number of unique groups of input attribute values is 240 (4 x 6 x 10), meaning that there is up to a total number of 240 unique input values. The unique input attribute values for each input attribute may be identified in a similar manner to the unique input values. For example, using the SELECT DISTINCT command in SQL.

In step 14 of Fig. 1, the processing task is performed with the unique input value to generate a discrete output. This involves executing the underlying set of rules with the unique input value, i.e. as defined for a particular synthetic group, as input. The detail of how the processing is performed depends on the application of the method of the invention and is beyond the scope of this application. Nevertheless, it is noted that such processing cannot be performed using SQL, but requires another programming language such as Java or C# due to the underlying set of rules. In general, Java is more computationally intensive than SQL because it focuses on complex computations rather than querying and manipulating data (SQL is optimised for working with large datasets, which is more efficient than using Java for similar tasks). However, because the processing task is only being performed with the unique input value(s), rather than all of the discrete inputs, this reduces the amount of computation performed in a programming language other than SQL. This ultimately causes a reduction in overall number of processor cycles used for the set of processing tasks.

In step 16 of Fig. 1, the discrete output for the unique input value is assigned to the processing tasks of the set of processing tasks having the same discrete input as the unique input value. As mentioned, each of the discrete inputs form a respective synthetic group.

Preferably, more than one synthetic group is formed, each synthetic group corresponding to a different unique input value. For a given set of processing tasks, the processing tasks may be synthetically grouped in different ways depending on the nature of the discrete inputs. Various methods for synthetically grouping discrete inputs and thus processing tasks are discussed in detail herein.

For example, consider again the set of discrete input values: 1, 2, 1, 3, 2, 2, 2, 2, 1, 3, 2, 1, 1, 3, 2, 1, 4, 2, 2, 1, 1, 1, 1, 2, 1, 1, 1, 2, 2, 2. As mentioned, unique input values of this set of discrete input values are 1, 2, 3, and 4. For this set of discrete inputs, then, the discrete inputs may be grouped into up to four synthetic groups. For example, the set of discrete inputs may be grouped into four groups, as follows:
Synthetic group I: 1, 1, 1, 1, 1, 1, 1, 1, 1, 1, 1, 1, 1
Synthetic group II: 2, 2, 2, 2, 2, 2, 2, 2, 2, 2, 2, 2, 2
Synthetic group III: 3, 3, 3
Synthetic group IV: 4

As shown in Fig. 1, one way to implement more than one synthetic group is to repeat steps 12, 14, and 16. This involves at least identifying a second unique input value from the set of discrete inputs among the set of processing tasks; performing the processing task with the second unique input value to generate a second discrete output; and assigning the second discrete output to the processing tasks of the set of processing tasks having the same discrete input as the second unique input value. Of course, this may be repeated up to n times, where n is the total number of unique input values of the set of discrete inputs. In this case, the method further involves identifying an nth unique input value from the set of discrete inputs among the set of processing tasks; performing the processing task with the nth unique input value to generate an nth discrete output; and assigning the nth discrete output to the processing tasks of the set of processing tasks having the same discrete input as the nth unique input value. In this way, the process of identifying synthetic groups can be repeated until a predetermined reduction in processing cycles is achieved.

Alternatively, and preferably, instead of sequentially identifying a unique input value and forming the corresponding synthetic group, a plurality of unique input values may be identified to form a plurality of synthetic groups at once. In such embodiments, step 12 of Fig. 1 may comprise identifying a plurality of unique input values from the set of discrete inputs among the set of processing tasks. Steps 14 and 16 are then performed for each of the plurality of unique input values and thus plurality of synthetic groups at once.

In some embodiments, the plurality of unique input values for the set of processing tasks may be predetermined, i.e. before step 12 of Fig. 1. Especially when using periodic batch processing, possible unique input values may be the same across different batches of processing tasks, although each batch may contain its own subset of the possible unique input values (put another way, not all of the possible unique input values may be present in each batch of processing tasks). In this case, identifying the unique input values in any particular batch involves determining which of the predetermined unique input values are present in the discrete input of the processing tasks of the particular set of processing tasks in the batch.

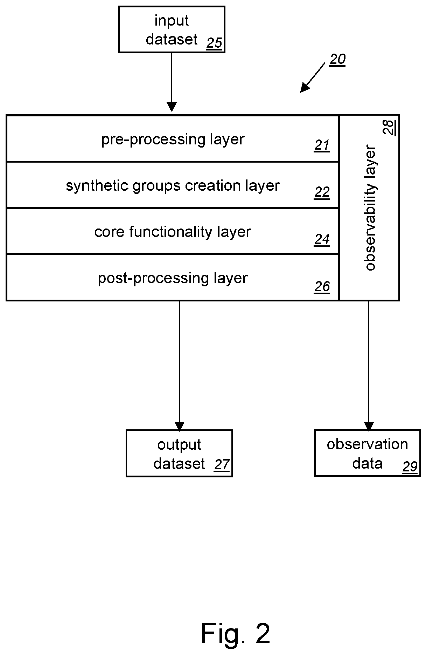

As shown in Fig. 2, the method of the invention may be implemented in a database 20 having a plurality of layers, each layer having a different functionality. Preferably, database 20 is embodied in a relational database as this makes the method more effective at reducing the number of processing cycles through the use of SQL which is optimised for working with large datasets and is more efficient than using Java or the like for similar tasks. Database 20 may use composite indexes, which are a data structure of records sorted based on a concatenation of multiple fields (this contrasts with single indexes, which use only one field).

The set of discrete inputs is stored in input dataset 25, each discrete input value of the set of discrete inputs forming a different row (or column) of the dataset. In embodiments where each discrete input has a plurality of input attributes, each input attribute value forms a field in the row (or column) of the input dataset 25. In such embodiments, the headers of the input dataset 25 may correspond to the plurality of input attributes. Similarly, the set of discrete outputs is stored in output dataset 27, each discrete output value of the set of discrete outputs forming a different row (or column) of the dataset (whichever is consistent with the discrete inputs). The input dataset 25 is input to the database 20 and the output dataset 27 is output from the database 20. Observation data 29 may also be output from the database 20.

The plurality of layers includes a pre-processing layer 21, a synthetic groups creation layer 22, a core functionality layer 24, a post-processing layer 26, and an observability layer 28. The observability layer 28 sits alongside the other layers as it may be used to make observations in or relating to one or more of the other layers. Preferably, the observability layer 28 is used to make observations for each of the other layers.

The functionality of the pre-processing layer 21 is optional as it depends on whether there are any derived input attributes, as further discussed below.

The functionality of the observability layer 28 may be optional depending on the technical context of the invention. For example, in cloud implementations, including the observability layer 28 is desirable as this provides information to the user about the processing being performed by the cloud computing environment.

The functionality of the synthetic groups creation layer 22, the core functionality layer 24 and the post-processing layer 26 are not optional.

Each of these layers is discussed in turn below.

### Pre-processing Layer

In the pre-processing layer 21, input attributes may be derived from the input attributes of input dataset 25 so that the derived input attributes form part of the discrete input for the purpose of synthetic group identification in the synthetic groups creation layer 22. Accordingly, the method of the invention may comprise, prior to step 12 of Fig. 1, generating at least one of the plurality of input attributes. When the input attributes of input dataset 25 are already in a suitable form for synthetic group identification, use of the pre-processing layer 21 is not required. In some instances, processes equivalent to those performed in the pre-processing layer 21 may be performed as part of the core logic in the core functionality layer. In such instances, to further reduce the number of processor cycles, the functionality may be removed from the core functionality layer to the pre-processing layer.

There are several reasons for using derived input attributes. Most commonly, a derived input attribute is used where the underlying input attribute is continuous in order to make the attribute discrete for synthetic group identification. For instance, if one of the input attributes is a timestamp (e.g. "15:08:21"), this is continuous and cannot be used for synthetic grouping, unlike discrete inputs. However, it is possible to use a derived input attribute instead. For instance, the timestamp may be converted to a time of day (e.g. "afternoon"). Additionally or alternatively, derived input attributes may be used to simplify the input data. For instance, the core functionality of the processing task may not require the data to be as granular as present in the input data. As an example, the core functionality of the processing task may require an indication of whether a country is EU or non-EU, but the input data may include various countries including United Kingdom, France, Germany, United States of America, etc. Accordingly, in the pre-processing layer 21 new data may be created that categorises the countries in the input data as EU or non-EU.

The derived input attributes are appended to the input dataset 25 as an additional row or column.

When performing principal component analysis (PCA) to identify a reduced group of input attributes from the input dataset 25, as is further discussed in respect the synthetic groups creation layer 22, PCA provides insight that the pre-processing layer 21 may be useful for reducing processing cycles further. For instance, if the core logic of the processing task is causing intermediate attributes to be stored in the dataset, these intermediate attributes are identified through PCA and used to determine derived input attributes for the pre-processing layer 21. This is because, in certain embodiments, the processing tasks involve converting continuous input attributes to discrete input attributes, i.e. as part of the core logic. In such instances, the discrete input attributes may be identified based on the core logic. For example, PCA is able to identify discrete input attributes for forming the synthetic groups in the synthetic groups creation layer.

### Synthetic Groups Creation Layer

Synthetic groups creation layer 22 is used to identify and create one or more synthetic groups from the set of processing tasks in input dataset 25. Synthetic groups creation layer 22 is therefore the layer that performs step 12 of Fig. 1.

Preferably, more than one synthetic group is identified from the set of processing tasks in the synthetic groups creation layer 22. Accordingly, step 12 of Fig. 1 may comprise identifying a plurality of unique input values from the set of discrete inputs among the set of processing tasks. As discussed previously, this may be performed using a SELECT DISTINCT command in SQL on the input dataset 25. Additionally, in embodiments where the discrete inputs comprise a plurality of input attributes, the unique input values, i.e. the particular groups of input attribute values, are identified by determining all unique groups (i.e. combinations) of input attribute values. The maximum number of synthetic groups is the same as the total number of unique input values. For instance, in the example used above that has discrete input values 1, 2, 1, 3, 2, 2, 2, 2, 1, 3, 2, 1, 1, 3, 2, 1, 4, 2, 2, 1, 1, 1, 1, 2, 1, 1, 1, 2, 2, 2, the set of discrete input values may be grouped into four groups, as follows:
Synthetic group I: 1, 1, 1, 1, 1, 1, 1, 1, 1, 1, 1, 1, 1
Synthetic group II: 2, 2, 2, 2, 2, 2, 2, 2, 2, 2, 2, 2, 2
Synthetic group III: 3, 3, 3
Synthetic group IV: 4

In this example, and in many circumstances, there are usually a few outliers of discrete input values that appear only once or very few times. In such circumstances, a synthetic group corresponding to a unique input value that appears only once or very few times is still formed. This is done to ensure that manipulation of the synthetic groups remains the same regardless of number of processing tasks to which that synthetic group relates, thereby simplifying the manipulations that are performed. In general, the fewer repeated discrete inputs, the less effective the methods of the invention are. Accordingly, the set of discrete inputs preferably have a plurality of repeated input values. The more the input values repeat, the more processing cycles are reduced.

In some embodiments, as mentioned above, the discrete input is formed of a plurality of input attributes. In such embodiments, the unique input value used to form a synthetic group is a particular group of input attribute values across the plurality of input attributes. In some circumstances, the particular group of input attribute values comprises an input attribute value for each of the plurality of input attributes. In other words, the total number of input attributes is the same as the number of input attributes in the particular group of input attribute values. However, more commonly, not all of the plurality of input attributes are required to form a synthetic group. In such circumstances, the particular group of attribute values comprises an input attribute value for a reduced group of input attributes of the plurality of input attributes.

The features mentioned in this section above refer to runtime activity. Runtime activity includes the activity between step 12 of Fig. 1 and step 16 of Fig. 1, and in relation to the layers of FIG. 2.

The features mentioned in the remainder of this section relate to analysis that may be performed before the runtime activity, i.e. before step 12 of Fig. 1. This analysis may be automated in a cloud environment, as discussed further herein.

Identifying a reduced group of input attributes of the plurality of input attributes forming the discrete input may be performed using principal component analysis (PCA). PCA is a dimensionality-reduction method that is used to reduce the dimensionality of large datasets, by transforming a large group of input attributes (or variables) into a reduced group of input attributes that still contains most of the information in the large set.

To perform PCA, the input dataset 25 corresponding to the set of discrete inputs, each having a plurality of input attributes, are input to a PCA algorithm along with the desired output attributes (discussed further below). Algorithms for performing PCA for various programming languages are known in the art. Additionally, several Java libraries that have PCA functionality, including Smile, Java-ML, Weka, and JAMA.

The use of PCA is particularly effective when performing batches of processing tasks, particularly where the possible input attributes across the batches are the same. This is because the reduced group of input attributes of one batch can be used to perform the next batch. The reduced group of attributes identified by PCA can be validated by running database queries against historical datasets (which have discrete outputs already calculated), i.e. from previous batches, to confirm whether the reduced group of input attributes accurately represents the underlying set of rules.

As an alternative to using PCA, for instance where batches of processing tasks are not being performed, the reduced group of input attributes may be identified manually based on the core logic of the processing task.

### Core Functionality Layer

In the core functionality layer 24, the underlying set of rules, i.e. the core logic, are applied to the unique input values identified for each synthetic group. Accordingly, core functionality layer 24 is used to perform step 14 of Fig. 1. Specifically, the core functionality layer 24 is used to generate a discrete output for each of the unique input values, and thus for each synthetic group. Other than changing the inputs to which the core logic is applied (from all discrete inputs to the unique input values only), the core logic of the core functionality layer 24 is not changed.

Like the discrete inputs, the discrete outputs may comprise a plurality of output attributes. The desired discrete inputs and plurality of output attributes correspond to the output variables of the underlying set of rules.

Core functionality layer 24 is preferably in the same programming language as the underlying set of rules, for instance Java or C#, especially if the logic of the underlying set of rules is complex. Such programming languages are more computationally intensive compared to manipulating databases with SQL, hence the reduction in performing core functionality by using the synthetic groups, as compared to all of the discrete inputs, causes reduced processing cycles to be performed.

When implemented in a cloud computing environment, as discussed herein, the core logic of core functionality layer 24 may be determined from the computer code used for performing the underlying set of rules (e.g. computer code 324 of Fig. 4B and Fig. 4C). As discussed herein, execution of the computer code causes the processing tasks to be performed.

### Post-processing Layer

In the post-processing layer 26, the discrete outputs for each of the synthetic groups are assigned to the corresponding discrete inputs within the respective synthetic group. Put another way, post-processing layer 26 is responsible for performing step 16 of Fig. 1.

When a plurality of synthetic groups are being used, identifying the processing tasks of the set of processing tasks having the same discrete input as the unique input value and assigning the discrete output to the identified processing tasks is performed for each of the plurality of unique input values. For each synthetic group, this is performed in SQL by selecting rows or columns in the input dataset 25 having the unique input value and setting the corresponding row or column in the output dataset 27 to the discrete output. Once this has been done for each synthetic group, discrete outputs are assigned to all of the processing tasks within the synthetic group.

The assigned discrete outputs are appended to the input dataset 25 as an additional row or column to form the output dataset 27.

The post-processing layer 26 may calculate one or more further output attributes based on the discrete outputs and append the further output attributes as an additional row or column to the output dataset 27. Such further output attributes are application specific and a detailed discussion of all possible applications is beyond the scope of this application.

### Observability Layer

Observability layer 28 provides observation data 29 about the one or more of the other layers of the dataset 20.ln cloud computing implementations, as discussed further herein, observability layer 28 is important to provide the user information on how the cloud computing environment is processing the set of processing tasks.

For layers involving SQL, observability layer 28 may be implemented using (basic) mathematical functions.

For layers involving programming languages such as Java, observability layer 28 is implemented using syntactic metadata, such as Java annotations. Java annotations are a form of metadata that can be added to Java code elements, such as classes, methods, fields, and parameters, to provide additional information and instructions to the compiler, runtime, or other tools. Annotations begin with the '@' symbol and can be used for a variety of purposes, including configuration, documentation, code analysis, and runtime behaviour. For example, @Autowired is an annotation used to automatically wire dependencies between components.

In particular, annotations may be added to the computer code of the core functionality layer 24. Annotations may be accessed and processed at compile-time or at runtime. At compile-time, tools like Java compilers or annotation processors may analyse and manipulate the annotated code. At runtime, applications can use reflection to access and interpret annotations, allowing for dynamic behaviour or configuration.

Observability layer 28 may be used to determine one or more observations to form observation data 29, which is output to a user.

One example observation is the number of processor cycles used when implementing synthetic groups to process the processing tasks compared to conventional processing of the processing tasks. For this observation, the number of processor cycles to complete the set of processing tasks is recorded. Then, the number of processor cycles to complete the set of processing tasks is estimated, for example by multiplying the number of processor cycles to perform the processing task with the unique input value to generate a discrete output by the number of processing tasks. Subsequently, the difference between the recorded number of processor cycles and the estimated number of processor cycles is outputted as an observation for the observation data 29. The recording of the number of processing cycles gives an indication of actual processor cycles used, whilst the estimate gives an estimated number of processor cycles that would have been used if synthetic groups were not used. This means that the outputted difference provides an estimate the reduction in processor cycles. As an alternative, the set of processing tasks may be processed without synthetic groups so that the outputted difference provides the actual reduction in processor cycles.

Preferably, the outputted difference is at least 50%. That is to say that there is a 50% decrease in the amount of processor cycles used. In practice, with the right input dataset, synthetic groups can reduce the number of processor cycles by 80% or more, even when considering the processor cycles taken to implement the methods of the invention.

There are several known methods for recording the number of processor cycles, which could be used depending on how the method of the invention is implemented (as further discussed below) or a substitute metric such as processing time may be used (assuming the underlying hardware or its general usage outside of the processing tasks does not change).

Another example observation is an estimate of the reduction in the number of processing cycles when implementing synthetic groups to process the processing tasks compared to conventional processing of the processing tasks (i.e. before the processing using synthetic groups has taken place). For this observation, the number of processor cycles to complete the set of processing tasks when using the synthetic group and the number of processor cycles to complete the set of processing tasks without using the synthetic group may each be estimated, and the difference between the two estimated number of processor cycles outputted as an observation for the observation data 29. Estimating the number of processing cycles when not using synthetic groups may be performed by multiplying the number of processor cycles to perform the processing task with a unique input value to generate a discrete output by the number of processing tasks. Estimating the number of processing cycles when using synthetic groups may be performed by multiplying the number of processor cycles to perform the processing task with a unique input value to generate a discrete output by the number of synthetic groups (assuming all rows or columns of the input dataset 25 are assigned to a synthetic group).

In some embodiments, observability layer 28 may provide an observation that includes feedback to determine the number of synthetic groups to use. That is, once steps 12 and 14 of Fig. 1 are performed for a particular unique input value, the observability layer 28 can be used to estimate the reduction in processor cycles to determine whether to repeat the same steps for a further unique input value. This may be repeated until a target reduction in processor cycles is achieved. For instance, there may be a predetermined target of 95%, 90%, 85%, 80%, 75% reduction in processor cycles.

When using PCA to determine a reduced group of input attributes, an alternative observation of observability layer 28 may be used alongside to synthetic groups creation layer 22 to optimise the synthetic groups. In particular, the outputted difference in the observation may be used to determine whether to adjust the reduced group of input attributes of the plurality of input attributes.

Other observations may be used, as discussed with respect to the cloud computing implementation.

### Computing Device Implementation

Fig. 3A shows an example computing device 100 in which the methods of the invention may be implemented. Computing device 100 may be embodied as any type of computer, including a server, a desktop computer, a laptop, a tablet, a mobile device, or the like.

Components of computing device 100 include, but are not limited to, a processor 110, such as a central processing unit (CPU), system memory 120, and system bus 130. System bus 130 provides communicative coupling for various components of computing device 100, including system memory 120 and processor 110. System bus 130 may be or may include an address bus, data bus or control bus. Example system bus architectures include parallel buses, such as Peripheral Component Interconnect (PCI) and Integrated Drive Electronics (IDE), and serial buses, such as PCI Express (PCIe) and Serial ATA (SATA).

System memory 130 is formed of volatile and/or non-volatile memory such as read only memory (ROM) and random-access memory (RAM). ROM is typically used to store a basic input/output system (BIOS), which contains routines that boots the operating system and sets up the components of computing device 100, for example at start-up. RAM is typically used to temporarily store data and/or program modules that the processor 110 is operating on.

Computing device 100 includes other forms of memory, including (computer readable) storage media 145, which is communicatively coupled to the processor 110 through a memory interface 140 and the system bus 130. Storage media 145 may be or may include volatile and/or non-volatile media. Storage media 145 may be or may include removable or non-removable storage media. Storage media 145 may be within computing device 100 or external to computing device 100. Examples storage media 145 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 145 may be stored according to known methods of storing information such as computer readable instructions, data structures, program modules or other data, the form of which is discussed further herein.

In some embodiments, such as the one shown in Fig. 3A, computing device 100 is communicatively coupled to an external display device 155 via a graphics/video interface 150 and system bus 130. Alternatively, computing device 100 may have an integrated display (not shown) which is communicatively coupled via the graphics/video interface 150 and system bus 130. Optionally, a graphical processing unit 157 (GPU) may be used in addition to improve graphical and other types of processing.

Computing device 100 also includes an input peripheral interface 160 and an output peripheral interface 170 that are communicatively coupled to the system bus 130. Input peripheral interface is communicatively coupled to one or more input devices 165, for interaction between the computing device 100 and a human operator. Example input devices 165 includes a keyboard, a mouse, a touchscreen, and a microphone. In some embodiments, the touchscreen and display may use the same screen. Output peripheral interface 170 is communicatively coupled to one or more output devices 175. Example output devices 175 includes speakers and a printer. The communicative coupling may be wired, such as via a universal serial bus (USB) port, or wireless, such as over Bluetooth.

Computing device 100 operates in a networked or distributed environment using at least one communication network 205 to one or more remote computers. The one or more remote computers may be a personal computer, a server, a router, a peer device, a mobile device, a tablet, or other common network node, and typically includes many or all of the components described above relative to computer system 100. The at least one communication network 205 typically includes at least the Internet. Other communication networks 205 may be used including a local area network (LAN) and/or a wide area network (WAN). Further communication networks may be present in various types of computing device 100, such as mobile devices and tablets, to cellular networks, such as 3G, 4G LTE and 5G. Computing device 100 establishes communication with network environment 200 through network interface 180. In a networked environment, program modules depicted relative to computer system 100, or portions thereof, may be stored in the remote memory storage device.

As shown in Fig. 3B a number of program modules are stored on the system memory 120, including an operating system 122, one or more application programs 123, other program modules 124, and program data 125. Similarly, as shown in Fig. 3C, storage media 150 stores one or more application programs 153, other program modules 154, and program data 155.

In one implementation, the methods of the invention may be implemented as an application program 123 that is stored in storage media 150. The advantage of implementing the methods of the invention in this way is that the application program 123 can be implemented on existing computing systems 100. However, in general, when implemented this way, the application program 123 usually has to be manually chosen to process the processing tasks. The input dataset 25 may be received via network interface 190 and stored in the storage media 150. The output dataset 27 may be sent elsewhere via network interface 190. The processing of the steps in between are performed by processor 110 in conjunction with the application program 123. System memory 120 may be used to store temporary or transitory data relating to the application program 123.

In another implementation, the methods of the invention may be implemented in the operating system 122 that is stored on system memory 120. The advantage of implementing the methods of the invention in this way is that, regardless of the specific application, the reduced processor cycles may be used for any suitable set of processing tasks.

### Cloud Computing Implementation

Fig. 4A is a schematic illustrating a further example system for implementing methods of the invention. As shown in Fig. 4A, cloud computing environment 200 is communicatively coupled via communication network 205 to one or more computing systems 100₁...100ₙ. The computing systems 100₁...100ₙ are user computing systems and interface between a user and the cloud computing environment 200. Communication network 205 is the same as described with respect to Fig. 3A. Preferably, communication network 205 may utilise encryption (e.g., Secure Sockets Layer) to secure data being transferred over the communication network 205 to the cloud computing environment 200.

Cloud computing environment 200 may be owned and maintained by a third party, i.e. a party that is not the user of the one or more computing systems 100₁...100ₙ. Examples of third-party cloud computing environments include Amazon Web Services (AWS), Microsoft Azure, Google Cloud Platform, and IBM Cloud. By connecting to a multitude of computing systems 100₁...100ₙ, and therefore users, cloud computing environment 100 is able to benefit from economies of scale, thereby making processing and storing large quantities of data in cloud computing environment 200 efficient.

Cloud computing environment 200 may host computer code 324 for performing processing tasks (not shown) which is executed in the cloud computing environment 200 in response to a request from a user's computing system 100. The computer code 324 may include executable and/or source code, depending on the implementation language. Execution of the computer code causes the processing tasks to be performed, and the output data produced by executing the computer code is available for the user to access. In other words, the core logic of the core functionality layer 24 is implemented in the computer code 324. In this way, the computer resources required for performing processing tasks are outsourced from the user's computing system 100 to cloud computing environment 200. This is advantageous because it means that the user does not have to provision and maintain their own physical computer hardware capable of performing the processing tasks. Moreover, user can send the request from anywhere, as long as they have connection to cloud computing environment 200 via communication network 205. Since the communication network 205 is typically the Internet, which is ubiquitous, the accessibility of cloud computing environment 205 to the user is extremely high. This is convenient as the user does not have to be physically present at a particular location in order to access cloud computing environment 200. A user can access the computer code through a web browser or any other appropriate client application residing on computer system 100.

Fig. 4B shows an exemplary cloud computing environment 200 for implementing a method of the invention. As seen in Fig. 4B, cloud computing environment 200 comprises cloud computing environment hardware 202 that can be invoked to instantiate data processing, data storage, or other computer resources using cloud computing hardware 202 for a limited or defined duration. Cloud computing environment hardware 202 may comprise one or more servers 200₁ to 200ₙ, and a storage array network 210, as well as any other suitable hardware. Cloud computing environment hardware 202 may be configured to provide a virtualisation environment 220 that supports the execution of a plurality of virtual machines 310 (not shown) across the one or more servers 200₁ to 200ₙ. As described in relation to Fig. 4C, the plurality of virtual machines 310 provide various services and functions for cloud computing environment 200.

Virtualisation environment 220 of Fig. 4B includes orchestration component 222 that monitors the cloud computing environment hardware 202 resource consumption levels and the requirements of cloud computing environment 200 (e.g., by monitoring communications routed through addressing and discovery layer 224), and provides additional cloud computing environment hardware 202 to cloud computing environment 200 as needed. For example, if cloud computing environment 200 requires additional virtual machines 310 to host new computer code 324, orchestration component 222 can initiate and manage the instantiation of the virtual machines 310 on the one or more servers 200, to 200n to support such needs. In one example implementation, virtualisation environment 220 may be implemented by running Amazon Elastic Compute Cloud (Amazon EC2) on servers 200₁ to 200ₙ. It should be recognised that any other virtualization technologies, including VMware ESX and Microsoft Hyper V virtualization technologies, may alternatively be utilised.

Cloud computing environment 200 supports an execution environment 232 that comprises a plurality of virtual machines 310 (or plurality of containers 320, as is discussed in relation to Fig. 3) instantiated to host deployed computer code 324. For example, deployment by user's computing system 100 of computer code 324 to the cloud computing environment 100 results in the hosting of computer code 324 in virtual machine 310₁ and/or container 320₁, of execution environment 232.

Computer code 324 can access internal services provided by cloud computing environment 200 as well as external services from one or more external providers (not shown). Services may include, for example, accessing a REST API, a custom database, a relational database service (e.g., MySQL, etc.), monitoring service, background task scheduler, logging service, messaging service, memory object caching service and the like. A service provisioner 230 serves as a communications intermediary between these available services (e.g., internal services and external services) and other components of cloud computing environment 200 (e.g., cloud controller 238, router 236, containers 320) and assists with provisioning available services to computer code 324 during the deployment process.

Service provisioner 230 may maintain a stub for each service available to cloud computing environment 200. Each stub itself maintains service provisioning data for its corresponding service, such as a description of the service type, service characteristics, login credentials for the service (e.g., root username, password, etc.), a network address and port number of the service, and the like. Each stub is configured to communicate with its corresponding service using an API or similar communications protocol.

Referring back to Fig. 4B, addressing and discovery layer 224 provides a common interface through which components of cloud computing environment 200, such as service provisioner 230, cloud controller 238, router 236 and containers 320 in the execution environment 232 can communicate. For example, service provisioner 230 communicates through addressing and discovery layer 224 to broadcast the availability of services and to propagate service provisioning data for such services during deployment of computer code 324 in cloud computing environment 200.

Cloud controller 238 is configured to orchestrate the deployment process for computer code 324 that in cloud computing environment 200. In particular, cloud controller 238 receives computer code 324 submitted to cloud computing environment 100, for example from the user's computing system 100 and interacts with other components of cloud computing environment 200 to call services required by the computer code 324 and package the computer code 324 for transmission to available containers 320.

Typically, once cloud controller 238 successfully orchestrates the computer code 324 in container 320, a user can access the computer code through a web browser or any other appropriate client application residing on their computer system 100. Router 236 receives the web browse"s access request (e.g., a uniform resource locator or URL) and routes the request to container 310 which hosts the computer code 324.

It should be recognised that the embodiment of Fig. 4B is merely exemplary and that alternative cloud computing environment architectures may be implemented consistent with the teachings herein. For example, while Fig. 4B implements cloud computing environment 200 on cloud computing environment hardware 202, it should be recognised that cloud computing environment 200 may be implemented by a third-party in an alternative manner and on top of any type of hardware.

Fig. 4C is a schematic of an exemplary server 300 for implementing a method of the invention. In particular, Fig. 4C depicts server 300 comprising server hardware 302 and virtual machine execution environment 332 having containers 320 with computer code 324. The server hardware 302 may include local storage 304, such as a hard drive, network adapter 305, system memory 306, processor 307 and other I/O devices such as, for example, a mouse and keyboard (not shown).

A virtualisation software layer, also referred to as hypervisor 312, is installed on top of server hardware 302. Hypervisor 312 supports virtual machine execution environment 332 within which containers 320 may be concurrently instantiated and executed. In particular, each container 320 provides computer code 324, deployment agent 325, runtime environment 326 and guest operating system 327 packaged into a single object. This enables container 320 to execute computer code 324 in a manner which is isolated from the physical hardware (e.g. server hardware 302, cloud computing environment hardware 202), allowing for consistent deployment regardless of the underlying physical hardware.

As shown in Fig. 4C, virtual machine execution environment 332 of server 200 supports a plurality of containers 320₁ to 320ₙ. Docker is an example of a virtual machine execution environment 332 which supports containers 320. For each container 320₁ to 320ₙ, hypervisor 312 manages a corresponding virtual machine 310₁ to 310ₙ that includes emulated hardware such as virtual hard drive 314, virtual network adaptor 315, virtual RAM 316, and virtual CPU 317. For example, virtual machine 310 may function as an equivalent of a standard x86 hardware architecture such that any x86 supported operating system, e.g., Microsoft Windows, Linux, etc., may be installed as a guest operating system 327 to execute computer code 324 for container 320. Container 320 may be provided by virtualisation environment 220, as previously discussed for Fig. 4B.

Hypervisor 312 is responsible for transforming I/O requests from guest operating system 327 to virtual machines 310, into corresponding requests to server hardware 302. In Fig. 4C, guest operating system 327 of container 320 supports the execution of deployment agent 325, which is a process or daemon that communicates (e.g., via addressing and discovery layer 224) with cloud controller 236 to receive and unpack computer code 324 and its deployment package. Deployment agent 325 also communicates with router 236 to provide network routing information for computer code 324 that have been deployed in container 320. Guest operating system 327 further supports the execution of runtime environment 326 within which computer code 324 is executed.

It should be recognised that the various layers and modules described with reference to Fig. 4C are merely exemplary, and that other layers and modules may be used with the same functionality without departing from the scope of the invention. It should further be recognized that other virtualised computer architectures may be used, such as hosted virtual machines.

The methods of the invention may be implemented in cloud computing environment 200. In such embodiments, an extended method may be implemented, as depicted in Fig. 5A. According to the method of Fig. 5A, a series of initialisation steps (i.e. steps 51 to 54) are performed by the cloud computing environment 200 on a set of processing tasks, which may be a first batch of processing tasks, prior to the method for reducing processor cycles (i.e. the method of Fig. 1) commencing. The method for reducing process cycles is then performed on the set of processing tasks and any subsequent sets of processing tasks, i.e. a second and further batches of processing tasks. The initialisation steps are used by cloud computing environment 200 to determine whether the application of synthetic groups is useful and would be beneficial for the processing tasks, and to restructure the computer code 324 used to execute the processing tasks if so.

Prior to the steps shown in Fig. 5A, the cloud computing environment 200 receives the set of processing tasks. For example, the cloud computing environment 200 may receive the set of processing tasks from computing system 100 of a user or from a server external to the cloud computing environment. The cloud computing environment 200 may already be storing the underlying set of rules, i.e. the core logic, embodied in computer code 324 for performing the processing tasks. If not, the core logic embodied in computer code 324 may also be received by the cloud computing environment 200 prior to the steps shown in Fig. 5A commencing. In any event, the set of processing tasks is received before step 51 whilst the computer code 324 is received before step 53 at the latest.

As shown in Fig. 5A, the cloud computing environment 200 then performs the following steps: analysing the set of discrete inputs and the set of discrete outputs of the set of processing tasks (step 51); analysing the computer code 324 configured to execute the set of processing tasks (step 52); executing the computer code to perform the set of processing tasks and analysing the execution of the computer code (step 53); and outputting restructured computer code based on the analyses (step 54). Each of these steps is discussed in turn below. Once these steps have been performed, at step 55, method 10 of Fig. 1 is performed for the set of processing tasks. When performing method 10 of Fig. 1 with the set of processing tasks, the restructured computer code is used for processing the set of processing tasks, i.e. using database 20 including the core functionality layer 24.

At step 51 of Fig. 5A, set of discrete inputs and the set of discrete outputs of the set of processing tasks is analysed by the cloud computing environment 200. The aim of this analysis is to predict how effective using synthetic groups is likely to be for the set of processing tasks. The analysis may be similar to the analysis that occurs before runtime discussed with respect to the synthetic groups creation layer 22 of Fig. 2 (including the use of PCA).

The output of step 51 is provided by the cloud computing environment 200 as part of the function of observability layer 28. As a consequence of the analysis performed at step 51, the cloud computing environment may provide an initial report with these observations to the user of computing system 100. In other words, the observations in the initial report forms part of observation data 29 of Fig. 2 to the user.

Step 51 is performed by the cloud computing environment 200 using appropriate data analysis scripts. The data analysis scrips include various functions that analyse dependency of output variables on input variables. One function is to identify the (total) number of unique input values from the set of discrete inputs among the set of processing tasks. This means that the cloud computing environment 200 may identify the maximum number of synthetic groups within the set of processing tasks that could form part of synthetic groups creation layer 22. This is done because the effectiveness of using synthetic groups depends on the (total) number of unique input values that are identified, and thus number of synthetic groups in synthetic groups creation layer 22. The fewer unique input values, the lesser the processing cycles and more effective the use of synthetic groups is likely to be. For example, for a set of processing tasks having 1,000,000 total processing tasks, having 5,000 unique input values is likely to reduce the number of processor cycles considerably more than having 500,000 unique input values.

Once the total number of unique input values is determined, it may be used to output the difference between the number of processor cycles (or time taken) to process the set of processing tasks with and without synthetic groups, as discussed previously herein with respect to observability layer 28. This observation may be provided in the initial report for the user. It may be that the user stops the steps performed by the cloud computing environment 200 from continuing at this point in view of the initial report.

Additionally in step 51, a reduced set of input attributes may be identified from the set of discrete inputs and used to form input dataset 25 for execution by the computer code 324. In particular, as discussed herein, each discrete input may comprise a plurality of input attributes. In such embodiments, the total number of unique input values is determined by multiplying the number of unique input attribute values for each of the input attributes together. Notably, the plurality of input attributes may be a reduced group of input attributes determined by PCA, as discussed herein. In such embodiments, the cloud computing environment 200 may use PCA to identify the reduced group of input attributes of the plurality of input attributes to form an input dataset 25 for execution by the computer code 324. In such embodiments, input dataset 25, which includes the reduced group of input attributes, is used in place of the set of processing tasks since this reduces the processing burden. The input dataset 25 may be sent to the user of the computing system 100 along with the initial report.

To aid the cloud computing environment 200 in determining the input dataset 25, the user of the computing system 100 may provide an indication of the output values or attributes. Additionally, the user of the computing system 100 may provide an indication of batch number.

The next step, step 52 of Fig. 5A, is for the cloud computing environment 200 to analyse the computer code that is configured to execute the set of processing tasks. This step is performed without the computer code 324 executing the set of processing tasks. Rather, the analysis performed is static code analysis of the computer code 324. The aim of this analysis is to determine the core functionality layer 24 and optionally the pre-processing layer 21 from the computer code 324. In particular, the analysis may be performed in order to determine the scope the core functionality layer 24 in terms of code boundaries, the scope of the pre-processing layer in terms of code boundaries, and/or whether any attributes need to be generated. Static code analysis depends on naming of attributes in the computer code 327 (e.g. implemented in Java/Python) and in the input dataset 25.

Static analysis scripts may be used by the cloud computing environment 200 to analyse the computer code in step 52. The static analysis scripts are configured to identify dataset references in the computer code 324, particularly any input attributes, intermediate attributes, and output attributes. Where no pre-processing layer 21 is required, the scripts running on the dataset indicate the core logic for the core functionality layer 24 as corresponding to the input attributes (or at least the reduced the reduced group of input attributes from PCA). If the core logic does not correspond to the input attributes, this indicates that one or more of the attributes involve an amount of pre-processing. These intermediate attributes are incorporated into the pre-processing layer 21. The intermediate attributes are also used to form derived input attributes in the input dataset 25.

Notably, the static code analysis of computer code 324 performed in step 52 of Fig. 5A does not necessarily predict what happens during runtime. Accordingly, step 53 is used to determine what happens to computer code 324 at runtime.

At step 53 of Fig. 5A, the computer code 324 (in its original form, without restructuring) is executed with the input database 25 to perform the set of processing tasks. While this happens, the execution of the computer code 324 is analysed. In other words, the analysis performed at step 53 is a runtime analysis of the computer code 324. Runtime analysis may add a small overhead to the processing so should be used for a limited period only (i.e. one batch of processing tasks). The aim of this analysis is to gather better performance information than step 51, to indicate with a higher degree of accuracy how using synthetic groups is likely to reduce the number of processing cycles. An additional aim to is to identify key functions and attributes.

Before performing the runtime analysis at step 53, annotations may be added by the user to the computer code 324. When the code compiler converts the computer code 324 to binary code, the compiler treats the annotation differently and based on the annotation definition adds hooks in the underlying function. The hooks provide information about the function to which the annotation is attached.

The intention of the annotation is to provide information similar to a Java/Python profiler, without impacting performance as significantly. The information provided by the annotation may include how many times a function is being called, how much time (mean, standard deviation) is taken by processing core logic, and/or how many processing cycles are used by the core logic. The performance monitoring may also be used to monitor any database operation execution time as well as core functionality (e.g. Java) executions. This information may be used to accurately determine how using synthetic groups is likely to impact the number of processor cycles used.

The output of the runtime analysis with respect to the annotations may be recorded in the observability layer 28.

Returning back to Fig. 5A, the next step 54 is to output restructured computer code 324 based on the analyses performed at steps 51, 52 and 53. Restructured computer code is provided because it is necessary to reprogram or refactor how the processing tasks are performed to account for the use of synthetic groups. In some programming languages, cloud computing environment 200 may apply these changes and restructure the computer code 324 automatically. However, in other programming language such as Java and C#, the changes may have to be implemented by the user. In any event, the restructured computer code 324 is initially determined and output by the cloud computing environment 200.

The restructured computer code comprises at least a synthetic groups creation layer 22, core functionality layer 24 and post-processing layer 26. Pre-processing layer 21 may also be part of the restructured computer code 324. Observability layer 28 may be part of the restructured computer executable code, and/or its observations may be presented by the cloud computing environment 200 along with the restructured computer executable code.

The pre-processing layer 21 part of the restructured computer code is determined by the cloud computing environment 200 based on the analysis performed at step 52, as previously discussed.

The synthetic groups creation layer 22 part of the restructured computer code is determined by the cloud computing environment 200 based on the analyses performed at step 51, step 52, and step 53. In particular, as mentioned above, input attributes for determining the unique input values are identified in step 51 through PCA. In some embodiments, the input attributes identified may be a reduced set of attributes available in the input dataset 25. Then, at step 52, derived input attributes are created. Subsequently, using the input attributes (which may be a reduced set of input attributes) and the derived input attributes at step 53 on the input dataset 25, the synthetic groups creation layer 22 is formed.

The core functionality layer 24 part of the restructured computer code is determined by the cloud computing environment 200 based on the analysis performed at step 52, as previously discussed.

The post-processing layer 26 part of the restructured computer code is determined by the cloud computing environment 200 based on the analyses performed at step 51, step 52, and step 53. This is the same as the synthetic groups creation layer 22 because the post-processing layer 26 reverses the steps performed when creating synthetic groups creation layer 22. In particular, the output attributes of the core functionality layer 24 are extended to all of the inputs, not only the synthetic groups. Additionally, derived input attributes may be removed from the dataset, and the entire plurality of input attributes reinstated.

The observability layer 28 part of the restructured computer executable code is determined by the cloud computing environment 200 based on the analysis performed at step 53. In particular, the annotations form part of observability layer 28. The observability layer 28 may also be based on the analyses performed at step 51 and 52, depending on the observations being determined.

In some embodiments, the output restructured computer code may form part of a report that is output to the user by the cloud computing environment 200. The report may include other observations determined via the analyses at steps 51, 52 and 53 and using the functionality of the observability layer 28. The purpose of the report is to assist user in determining whether using synthetic groups is appropriate for the set of processing tasks, and also provides the restructured code to implement synthetic groups. In this way, the cloud computing environment 200 is offering a service for indicating sets of processing tasks for which the number of processor cycles may be reduced.

For instance, the report may output one or more of the following observations to the user:
1. Any derived input attributes that have been created as part of the pre-processing layer 21. As discussed, pre-processing layer is determined in step 52.
2. The generated input dataset 25, including the reduced group of input attributes (if a reduced group is provided by the cloud computing environment 200 through PCA) and any derived input attributes. As discussed, the input dataset 25 is initially determined in Step 51, although this may be adapted to introduce derived input attributes at step 52.
3. The range of possible values that each input has. In embodiments involving a plurality of input attributes, the range of possible values each input attribute has. In embodiments using derived input attributes, the range of possible values each derived input attribute has.
4. Metrics indicating whether using synthetic groups is likely to be beneficial for reducing the number of processor cycles to perform the set of processing tasks. For example:
   Metrics based on the analysis performed at step 51, i.e. based on concentration of unique input values attributes.
   Metrics based on the ratio of processor cycles or time taken attributed to pre-processing layer 21 compared to the core logic layer 24, as determined at step 53 from the annotations.
   The processor cycles or time taken to process pre-processing layer 21 compared to the processor cycles or time taken to process the core functionality layer 24 per row. This is determined from the annotations at step 53. This is useful because it is preferable to have more processor cycles or time taken to process the core functionality layer 24 since this is the layer to which synthetic groups are applied.
   Processor cycles or time taken in execution language (e.g. Java, C# and the like) compared to processor cycles or time taken using database manipulation. Again, this provides a useful indication of the reduction in processor cycles by using synthetic groups.

Once step 54 has been completed, and the restructured computer code has been implemented, step 55 of Fig. 5A is then performed. At step 55, the method 10 of Fig. 1 is performed for the set of processing tasks, and then for subsequent sets of processing tasks, i.e. subsequent batches. When performing these sets of processing tasks, the total number of processor cycles and thus the total number of processing resources used by the cloud computing environment 200 (i.e. from cloud computing hardware 202) is lower due to the use of synthetic groups and the restructured computer code 324.

For subsequent sets of processing tasks, the user and/or the cloud computing environment 200 may implement an observability layer 20 and/or pre-processing layer 21 (if not already used) to refine how the synthetic groups are formed, and thus the extent of processor cycle reduction. This may involve further restructuring of the computer code 324. Additionally or alternatively, for subsequent sets of processing tasks, the cloud computing environment may provide further reports indicating how effective using synthetic groups is based by utilising the observability layer which, as discussed, reflects annotations in the restructured computer code.

Fig. 5B shows a refined version of the method shown in Fig. 5A. As with method 50 of Fig. 5A, method 500 of Fig. 5B involves the cloud computing environment 200, as well as a computing system 100. Various data are communicated between the cloud computing environment 200 and computing system 100 over communication network 205.

To initialise method 500, in step 510, the cloud computing environment 200 pushes a notification to the user's computing system of the processor cycle reduction service that it offers. The cloud computing environment 200 may provide a notification to the user to provide the discrete inputs. In response, the user of the computing system 100 provides to the cloud computing environment the set of discrete inputs (including all input attributes) at step 512. The user may also provide the output attributes to the cloud computing environment along with an indication of the batch number of the set of processing tasks. The cloud computing environment 200 then analyses the set of discrete inputs at step 513, as discussed with respect to step 51 of Fig. 5A. Based on this analysis, the cloud computing environment 200 generates an initial report as well as an input dataset 25. The initial report, which provides preliminary information on whether using synthetic groups may be useful, is provided to the computing system 100 in step 514. At step 515, the input dataset 25 is also sent to the user.

If the user decides to proceed in view of the initial report and input dataset 25, the next step 520 is for them to provide the computer code 520 that contains the underlying set of rules for processing the set of processing tasks to the cloud computing environment 200. The cloud computing environment 200 may provide a notification to the user to provide the computer code. Step 520 involves the user copying, for example, Java or Python code into a repository of the cloud computing environment 200. The user may also provide the top level class/function of the computer code. Once this has been done, at step 521, the cloud computing environment 200 analyses the computer code as discussed with respect to step 52 of Fig. 5A. From this analysis, the cloud computing environment 200 is able to output the core functionality layer 24 to the user's computing system 100 at step 522. If derived input attributes have been identified, as is the case in Fig. 5B, then a pre-processing layer 21 may also be output to the computing system 100, as shown by step 523. Additionally, a revised input dataset 25 may be sent to the user which contains the derived input attributes (not shown).

Next, the user may be prompted by the cloud computing environment to annotate the computer code. According, at step 530, the user annotates the computer code, as discussed with respect to step 53. Once the computer code is annotated, the user compiles it at step 531 and sends the compiled computer code to the cloud computing environment at step 532. The cloud computing environment then executes the computer code with the input dataset and performs runtime analysis at step 534.

Based on the analyses performed, as discussed with respect to step 54 of Fig. 5A, the cloud computing environment then provides a full report to the user's computing system 100 at step 541. The full report contains restructured computer code that has been determined based on the analysis, as again discussed with respect to step 54 of Fig. 5A. If the user wishes to implement synthetic groups based on the full report, the user then deploys the restructured computer code. In some embodiments (not shown), the user may deploy the restructured computer code on the user's computing system 100. In the embodiment shown in Fig. 5B, the restructured computer code is deployed on the cloud computing environment 200. This has the additional benefit that future resource use in the cloud computing environment 200 is likely to be significantly reduced.

An example implementation of step 53 of Fig. 5A or steps 534 and 535 of Fig. 5B is depicted in Fig. 5C.

In step 53A of Fig. 5C the cloud computing environment 200 performs the set of processing tasks. In this step, the processing tasks are processed in the conventional way, i.e. without using synthetic groups and without restructuring the computer code 324. Commonly, this means the core logic implemented in Java or a similar programming language of the computer code 324 is called for each of (or at least most of) the set of processing tasks in the input dataset 25. As a consequence, the total number of processor cycles used is high as calling and using the core logic is computationally expensive.

In parallel or series with step 53A of Fig. 5C, at step 53B the cloud computing environment 200 records the number of processor cycles used to complete the set of processing tasks at step 53A. In cloud computing environments 200, especially third-party cloud computing environments such as AWS, the amount of processing resources used are measured in order to determine how to allocate cloud processing resources (i.e. cloud environment hardware 202) efficiently. Thus, the same measurements may be used to determine the number of processor cycles used to complete the set of processing tasks. That said, other metrics may be used in place of or in addition to the number of processor cycles, as discussed herein. For instance, the number of times the core logic is called may be used as this is proportional to the number of processor cycles.

At step 53C of Fig. 5C, the cloud computing environment 200 identifies the (total) number of unique input values from the set of discrete inputs among the set of processing tasks. In other words, cloud computing environment 200 determines the number of synthetic groups within the set of processing tasks. As discussed, each discrete input may comprise a plurality of attributes. In such embodiments, the number of unique input values is determined by multiplying the number of unique attribute values for each of the attributes together. For example, consider a group of attributes having 6 attributes: `age quotient' with 6 possible unique attribute values, 'BMI quotient' with 5 possible unique attribute values, `heart condition' with 4 possible unique attribute values, `stroke' with 3 possible unique attribute values, `kidney' with 3 possible unique attribute values, and 'liver' with 4 possible unique attribute values. In this example, the total number of unique input values is 4320 (= 6x5x4x3x3x4). This means, in this example, there is a total number of possible synthetic groups of 4320. Notably, the group of attributes may be a reduced group of attributes determined by PCA, as discussed herein. This may have been performed in step 51.

Next, in step 53D of Fig. 5C, the cloud computing environment 200 estimates the number of processor cycles to complete the set of processing tasks when only performing the processing task for the number of unique input values (i.e. when using synthetic groups) determined at step 53C. This may be performed by multiplying the number of processor cycles to perform the processing task with a unique input value to generate a discrete output by the number of synthetic groups (assuming all rows or columns of the input dataset 25 are assigned to a synthetic group). That said, as with step 53B, other metrics may be used in place of or in addition to the number of processor cycles, as discussed herein. For instance, the number of times the core logic is called may be used as this is approximately proportional to the number of processor cycles.

At step 53E of Fig. 5C, the difference between the recorded number of processor cycles and the estimated number of processor cycles is output by the cloud computing system 200 to a user. The user may be interacting with the cloud computing environment 200 directly or via computing system 100 or a server external to the cloud computing environment. The outputted difference may form part of a report provided by the cloud computing environment 200 to the user to inform the user how much their processor cycles could be reduced by using synthetic groups and the method set out in Fig. 1.

### Example Applications

The methods of the invention are suitable for reducing processor cycles for any application involving a set of processing tasks that involve transforming a set of discrete inputs to a set of discrete outputs. Preferably, the transformation of the set of discrete inputs to the set of discrete outputs is based on an underlying set of rules (also known as "rules-based systems").

Many applications use an underlying set of rules to transform a set of discrete inputs to a set of discrete outputs. For example, computer security systems use a set of rules to protect computer networks and systems from unauthorized access or attack. For example, firewalls use a set of rules to block or allow incoming traffic based on predefined criteria. In robotics, robots are often programmed with a set of rules to guide their behaviour. For example, a robot that is programmed to pick up and sort objects will have a set of rules to determine how to identify and grasp the objects, and where to place them. Medical diagnosis systems often use a set of rules to help doctors diagnose illnesses based on symptoms and medical history. For example, a system might have a set of rules that determine when a patient should be referred for a particular medical imaging technique based on their symptoms. GPS navigation systems use a set of rules to determine the most efficient route to a destination and provide turn-by-turn directions. For example, a GPS navigation system may use a set of rules to avoid traffic congestion, toll roads or certain areas. Accordingly, the invention may be used in many different applications.

One example application relating to denial of service (DoS) attack prevention is shown in Fig. 6A to 6E. The DoS prevention algorithm works by assessing requests that occurred during a certain period of time (e.g. the previous 2 hours, 3 hours, 4 hours, etc.) and flagging IP addresses as potential threats. The objective of the algorithm is to categorise recent request activity into 'benign' or 'suspicious' categories in the output dataset 27. These categories may be used when further requests are received. For instance, the user at the source IP may need to respond to a challenge in their activity is flagged as suspicious.

In this example DoS prevention algorithm, the underlying set of rules categorises requests as 'benign' or 'suspicious' based on three attributes: whether the requests are authenticated; whether the number of requests is less than 10; and whether the average request byte speed is less than 1000. A full discussion of the underlying set of rules is beyond the scope of this application as this is merely an example.

Fig. 6A shows a set of inputs received by a computing system (e.g. computing system 100 of Fig. 3A) in the form of a summary of access requests received over a certain period of time (e.g. 2 hours, 4 hours). In particular, each row of the database shown in Fig. 6A, i.e. input dataset 25, corresponds to one or more access requests from a particular source. Each of the one or more access requests, and thus each input, has a plurality of attributes, including the identification number ('Flowld' in Fig. 6A), source IP (`Src IP'), source port ("Src Port'), destination IP (`Dest IP'), destination port (`Dest Port'), internet protocol ('Protocol'), resource, parameters, whether the requests are authenticated (`Is Authenticated'), the number of requests (`Num Of Req'), average time gap between requests (`Avg Gap Between Requests'), average request bytes speed (`Avg Req Bytes Speed'), average response bytes speed (`Avg Resp Bytes Speed'), average time gap between request and response (`Avg Gap Between Req Resp"), average number of forward packets (`Avg Fwd Pkts') and the average number of backwards packets (`Avg Bwd Pkts'), as represented by the header of the input dataset 25 of Fig. 6A. Such input dataset 25 may be automatically recorded by the computing system. Using standard processing, the processor of the computing system would have to perform 9 processing tasks via a programming language such as Java, in order to determine whether to accept or deny all of the access requests since there are 9 rows of requests received from difference sources in total. Methods of the invention are thus used to reduce the number of processing tasks being performed in a programming language like Java, and instead use database manipulation through SQL to reduce the number of processor cycles that need to be performed.

For this particular example, a pre-processing layer (i.e. pre-processing layer 20 of Fig. 2) is required because not all of the attributes that are used to determine the activity category are discrete. Thus, the first step in this particular example is to create discrete inputs for all of the attributes that are used in the underlying logic to determine the activity category. As discussed earlier, the first attribute is whether the requests are authenticated. This is already a discrete attribute since it has values `Yes' and 'No' only, thus no corresponding pre-processing is required for this attribute. The second attribute is the number of requests (`Num Of Req'). As the underlying logic has to determine whether the number of requests is less than 10, the number of requests, which is a continuous attribute (it has inputs ranging from 8 to 850 in Fig. 6A, but further numbers are possible), is converted to a discrete attribute by determining whether the continuous attribute is less than 10 and outputting either "Yes" or "No" accordingly. This new discrete attribute is 610A in Fig. 6B. The third attribute is the average request speed. Again, as the underlying logic has to determine whether the average request speed is less than 1000, the average request speed, which is a continuous attribute (it has example inputs ranging from 1 to 30,000 in Fig. 6A), is converted to a discrete attribute by determining whether the average request speed is less than 1000 and outputting either "Yes" or "No" accordingly. This further discrete attribute is 610B in Fig. 6B.

The next step is to identify unique input values from the set of discrete inputs among the set of processing tasks, and output the corresponding synthetic groups, as shown in Fig. 6C. The database shown in Fig. 6C is an embodiment of the synthetic groups creation layer (i.e. synthetic groups creation layer 22 of Fig. 2), and includes 6 unique input values in this particular example, corresponding to 6 synthetic groups (SG-YYY to SG-YYN in Fig. 6C). Each unique input value represents a particular group of attributes. For example, in SG-YYY, the requests are authenticated (the first Y of YYY), the number of requests is below 10 (the second Y of YYY) and the average request speed is less than 1000 (the third Y of YYY). Notably, the total possible number of unique input values for this example is 8 (= 2x2x2) because there are two choices for each of the three attributes. However, since two of these unique input values are not present in the set of discrete inputs, it is not necessary to create corresponding synthetic groups.

Next, as shown in Fig. 6D, the processing task is performed on the discrete inputs from the synthetic groups shown in Fig. 6C to generate a discrete output for each synthetic group. In particular, as shown in Fig. 6D, the output ('Activity' in Fig. 6D) is determined for each synthetic group according to the underlying rules of the DoS prevention algorithm (the specific rules are beyond the scope of this application and therefore not discussed herein). In practice, this means that a further column is added to the database of Fig. 6C with the outputs, as shown by column 630 in Fig. 6D. The resulting database is referred to herein as the core functionality layer (i.e. core functionality layer 24 of Fig. 2).

Then, as shown in Fig. 6D and Fig. 6E, the output, in this example the suspicious or benign category, is applied to all access requests within the synthetic group, i.e. all discrete inputs having the same unique input value. For example, the rows starting with FlowID 2 and 7 both have the same unique input value (i.e. the requests are authenticated, the number of requests is not lower than 10, the average request speed is now lower than 1000), hence the activity from the corresponding synthetic group (i.e. SG-YNN) is applied to both these rows. This is repeated for all synthetic groups in table Fig. 6E until all outputs are completed, as depicted in Fig. 6E. This functionality is provided by the post-processing layer (i.e. post-processing layer 26 of Fig. 2). The database shown in Fig. 6E then forms the output dataset 27.

In this particular example, there are 6 synthetic groups, as compared to the total number of processing tasks which is 9, hence the number of processing tasks (and thus processing cycles) are reduced. That said, this is a straightforward example to illustrate the principles of the invention and in practice it is typical for there to be much larger numbers of access requests over a particular period of time, hence the number of processing cycles is more dramatically reduced.

A second example application relating to determining the risk of complications from a new disease, for example for the purpose of vaccine prioritisation, is shown in Fig. 7A to Fig. 7E. The input dataset is represented by Fig. 7A and includes details of various people, including attributes relating to name, age, BMI, and whether they have various medical complications, including a heart condition, a stroke, kidney issues, and liver issues. The processing task in this second application is to determine the risk of complications to a new disease based on any risk-related attributes (age, BMI, heart condition, stroke, kidney, liver; not name or mobile number). In this example application, the risk is calculated simply by summing all of the risk-related attributes together.

In this second example, a pre-processing layer (i.e. pre-processing layer 20 from Fig. 2) is used to transform continuous attributes, specifically the age and BMI attributes to discrete attributes. In particular, as shown in Fig. 7B, the age attribute is transformed into an age quotient by transforming ages 0-25 to 1, 26-40 to 2, 41-55 to 3, 56-70 to 4 and 71+ to 5. Similarly, the BMI attribute is transformed into BMI quotients.

Next, using the attributes in Fig. 7B, the unique input values from the set of discrete inputs among the set of processing tasks are identified. In this particular example, not all of the attributes (i.e. columns) are used to determine whether a particular discrete input has a unique input value since not all attributes are relevant for the risk calculation. Rather, the name and mobile number attributes are ignored when determining the unique input values. Of the remaining risk-related attributes, as shown in Fig. 7C, which is a depiction of the synthetic groups creation layer, there are six unique input values corresponding to six synthetic groups, SG1-SG6. This is because person B1 and E1 have the same unique input values across the risk-related attributes, as do person D1 and G1.

Then, as shown in Fig. 7D, the processing task is performed on the discrete inputs from the synthetic groups shown in Fig. 7C to generate a discrete output for each synthetic group. In particular, as shown in Fig. 7D, the output ('Risk' in Fig. 7C) is determined for each synthetic using the risk calculation. As with the first example application, a further column is added to the database of Fig. 7C with the outputs, as shown in Fig. 7D. The resulting database is referred to as the core functionality layer (i.e. core functionality layer 24 of Fig. 2).

Finally, as shown in Fig. 7E, the output, in this example the risk, is applied to all people within the synthetic group, i.e. all discrete inputs having the same unique input value, and then to all synthetic groups. The output dataset 27, represented by Fig. 7E can then be forwarded to the relevant health care provisioner to determine the priority for vaccination, for example.

It should be appreciated that, although there are only 8 different inputs shown in the input dataset of Fig. 7A in this example, the principles of the invention can be scaled up to much larger numbers of input values (thousands or even millions). In general, larger numbers of inputs results in an improvement in the percentage reduction of processor cycles.

The invention is particularly effective in a number of scenarios. For example, the invention is particularly effective at reducing processor cycles where population (i.e. number of processing tasks) is high and core logic is complex. This is because even a small reduction in the number of times the core logic is used has a large impact on the overall amount of processing used. The invention is also particularly effective at reducing processor cycles for rules-based systems with a small number of input attributes in the discrete inputs. This is because there are fewer synthetic groups compared to the total number of tasks and therefore a greater reduction in processor cycles compared to processing each of the tasks individually, without using synthetic groups. The invention is also particularly effective at reducing processor cycles for tasks that require batch processing because this allows the synthetic groups to be specific to the processing tasks in the batch, yet uses knowledge of possible synthetic groups from all batches. The invention is also particularly effective at reducing processor cycles for tasks that are computationally intensive or where the number of tasks is large. This is because the processing involved in the identification of the groups is insignificant compared to the reduction in processing achieved by the methods of the invention.

Whilst several example applications are mentioned here, the invention should not be construed at limited to the example applications mentioned.

### General

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A computer-implemented method for (reducing processor cycles when) performing a set of processing tasks, the set of processing tasks involving transforming a set of discrete inputs to a set of discrete outputs, the method comprising: identifying a unique input value from the set of discrete inputs among the set of processing tasks; performing the processing task with the unique input value to generate a discrete output; and assigning the discrete output to the processing tasks of the set of processing tasks having the same discrete input as the unique input value.
2. The method of embodiment 1, further comprising: identifying a second unique input value from the set of discrete inputs among the set of processing tasks; performing the processing task with the second unique input value to generate a second discrete output; and assigning the second discrete output to the processing tasks of the set of processing tasks having the same discrete input as the second unique input value.
3. The method of embodiment 1 or 2, further comprising: identifying an nth unique input value from the set of discrete inputs among the set of processing tasks; performing the processing task with the second unique input value to generate an nth discrete output; and assigning the nth discrete output to the processing tasks of the set of processing tasks having the same discrete input as the nth unique input value.
4. The method of any preceding embodiment, wherein the set of processing tasks are performed as a batch.
5. The method of embodiment 4, wherein the batch is run at a specific time or in response to a specific event.
6. The method of any preceding embodiment, wherein each discrete input comprises a plurality of input attributes.
7. The method of embodiment 6, further comprising, prior to identifying the unique input value from the set of discrete inputs: generating at least one of the plurality of input attributes.
8. The method of embodiment 6, wherein generating at least one of the plurality of input attributes comprises transforming a continuous input attribute to a discrete input attribute.
9. The method of any of embodiments 6-8, wherein the unique input value is a particular group of input attribute values across the plurality of input attributes.
10. The method of embodiment 9, wherein the particular group of input attribute values comprises an input attribute value for each of the plurality of input attributes.
11. The method of embodiment 9, wherein the particular group of input attribute values comprises an input attribute value for a reduced group of input attributes of the plurality of input attributes.
12. The method of embodiment 11, wherein the reduced group of input attributes is identified using principal component analysis.
13. The method of any preceding embodiment, wherein identifying a unique input value from the set of discrete inputs among the set of processing tasks comprises: identifying a plurality of unique input values from the set of discrete inputs among the set of processing tasks.
14. The method of embodiment 13, wherein performing the processing task with the unique input value to generate a discrete output is performed for each of the plurality of unique input values.
15. The method of embodiment 13 or 14, wherein assigning the discrete output to the processing tasks of the set of processing tasks having the same discrete input as the unique input value is performed for each of the plurality of unique input values.
16. The method of any preceding embodiment, further comprising: recording the number of processor cycles to complete the plurality of processing tasks; estimating the number of processor cycles to complete the plurality of processing tasks by multiplying the number of processor cycles to perform the processing task with the unique input value to generate a discrete output by the number of processing tasks; and outputting the difference between the recorded number of processor cycles and the estimated number of processor cycles.
17. The method of embodiment 16, further comprising using the outputted difference to inform a reduced group of input attributes of the plurality of input attributes identified using principal component analysis.
18. The method of any preceding embodiment, wherein the set of discrete inputs is stored in an input dataset, each discrete input value of the set of discrete inputs forming a different row or column of the input dataset.
19. The method of any preceding embodiment, wherein the set of discrete outputs is stored in an output dataset, each discrete output of the set of discrete outputs forming a different row or column of the output dataset.
20. The method of claim 18 or 19, wherein assigning the discrete output to the processing tasks of the set of processing tasks having the same discrete input as the unique input value comprises: selecting any rows or columns of the input dataset having the same discrete input as the unique input value, and setting the corresponding rows or columns in the output dataset to the discrete output.
21. The method of any of embodiments 18-20, wherein the input dataset and/or the output dataset is embodied in a relational database.
22. The method of embodiment 21, wherein the relational database uses composite indexes.
23. The method of any preceding embodiment, wherein the method is implemented as an application program stored on a computer readable storage media of a computing system.
24. The method of any of embodiments 1-22, wherein the method is implemented in a cloud computing environment.
25. The method of any of embodiments 1-24, further comprising, prior to identifying a unique input value: analysing the set of discrete inputs and the set of discrete outputs of the set of processing tasks; analysing the computer code that is configured to execute the set of processing tasks; executing the computer code to perform the set of processing tasks and analysing the execution of the computer code; and outputting restructured computer code based on the analyses.
26. The method of embodiment 25, wherein the restructured computer code comprises: a synthetic groups creation layer determined by analysing the set of discrete inputs and the set of discrete outputs of the set of processing tasks, analysing the computer code that is configured to execute the set of processing tasks, and executing the computer code to perform the set of processing tasks and analysing the execution of the computer code.
27. The method of embodiment 25 or 26, wherein the restructured computer code comprises: a core functionality layer determined by analysing the computer code that is configured to execute the set of processing tasks.
28. The method of any of embodiments 25-27, wherein the restructured computer code comprises: a post-processing layer determined by analysing the set of discrete inputs and the set of discrete outputs of the set of processing tasks, analysing the computer code that is configured to execute the set of processing tasks, and executing the computer code to perform the set of processing tasks and analysing the execution of the computer code.
29. The method of any of embodiments 25-28, wherein the restructured computer code further comprises a pre-processing layer determined by analysing the computer code that is configured to execute the set of processing tasks.
30. The method of any of embodiments 25-29, wherein the restructured computer code further comprises an observability layer determined by executing the computer code to perform the set of processing tasks and analysing the execution of the computer code.
31. The method of embodiment 30, further comprising outputting one or more observations from an observability layer.
32. The method of any of embodiments 26-31, wherein the restructured computer code is used for processing the set of processing tasks.
33. The method of embodiment 32, wherein the restructured computer code is used for processing further sets of processing tasks.
34. The method of any of embodiments 26-33, wherein executing the computer code to perform the set of processing tasks and monitoring performance of the executing comprises: recording the number of processor cycles to complete the set of processing tasks.
35. The method of embodiment 36, wherein executing the computer code to perform the set of processing tasks and monitoring performance of the executing further comprises: identifying the number of unique input values from the set of discrete inputs among the set of processing tasks.
36. The method of embodiment 35, wherein executing the computer code to perform the set of processing tasks and monitoring performance of the executing further comprises: estimating the number of processor cycles to complete the set of processing tasks when only performing the processing task for the number of unique input values; and outputting the difference between the recorded number of processor cycles and the estimated number of processor cycles to a user.
37. An application program stored on a computer readable storage media of a computing system, the computing system having a processor, the application program having instructions to cause the processor to perform the method of embodiment 23.
38. A computing system comprising the application program of embodiment 37.
39. A cloud computing environment having a processor configured to perform the method of claim 25, or any of claims 26-36 when dependent on claim 25.

## Claims

1. A computer-implemented method for performing a set of processing tasks, the set of processing tasks involving transforming a set of discrete inputs to a set of discrete outputs, the method comprising:
identifying a unique input value from the set of discrete inputs among the set of processing tasks;
performing the processing task with the unique input value to generate a discrete output; and
assigning the discrete output to the processing tasks of the set of processing tasks having the same discrete input as the unique input value.

2. The method of claim 1, wherein each discrete input comprises a plurality of input attributes, wherein the unique input value is a particular group of input attribute values across the plurality of input attributes.

3. The method of claim 2, wherein the particular group of input attribute values comprises an input attribute value for a reduced group of input attributes of the plurality of input attributes, wherein the reduced group of input attributes is identified using principal component analysis.

4. The method of claim 2 or 3, further comprising, prior to identifying the unique input value from the set of discrete inputs:
generating at least one of the plurality of input attributes.

5. The method of claim 4, wherein generating at least one of the plurality of input attributes comprises transforming a continuous input attribute to a discrete input attribute.

6. The method of any preceding claim, wherein identifying a unique input value from the set of discrete inputs among the set of processing tasks comprises:
identifying a plurality of unique input values from the set of discrete inputs among the set of processing tasks.

7. The method of claim 6, wherein performing the processing task with the unique input value to generate a discrete output is performed for each of the plurality of unique input values.

8. The method of any preceding claim, wherein the set of discrete inputs is stored in an input dataset, each discrete input value of the set of discrete inputs forming a different row or column of the input dataset, and wherein the set of discrete outputs is stored in an output dataset, each discrete output of the set of discrete outputs forming a different row or column of the output dataset.

9. The method of claim 8, wherein assigning the discrete output to the processing tasks of the set of processing tasks having the same discrete input as the unique input value comprises:
selecting any rows or columns of the input dataset having the same discrete input as the unique input value, and setting the corresponding rows or columns in the output dataset to the discrete output.

10. The method of any preceding claim, further comprising, prior to identifying a unique input value:
analysing the set of discrete inputs and the set of discrete outputs of the set of processing tasks;
analysing the computer code that is configured to execute the set of processing tasks;
executing the computer code to perform the set of processing tasks and analysing the execution of the computer code; and
outputting restructured computer code based on the analyses.

11. The method of claim 10, wherein the restructured computer code comprises:
a synthetic groups creation layer determined by analysing the set of discrete inputs and the set of discrete outputs of the set of processing tasks, analysing the computer code that is configured to execute the set of processing tasks, and executing the computer code to perform the set of processing tasks and analysing the execution of the computer code;
a core functionality layer determined by analysing the computer code that is configured to execute the set of processing tasks; and
a post-processing layer determined by analysing the set of discrete inputs and the set of discrete outputs of the set of processing tasks, analysing the computer code that is configured to execute the set of processing tasks, and executing the computer code to perform the set of processing tasks and analysing the execution of the computer code.

12. The method of claim 11, wherein the restructured computer code further comprises:
a pre-processing layer determined by analysing the computer code that is configured to execute the set of processing tasks.

13. The method of claim 11 or 12, wherein the restructured computer code further comprises:
an observability layer determined by executing the computer code to perform the set of processing tasks and analysing the execution of the computer code.

14. The method of any of claims 10-13, wherein the restructured computer code is used for processing the set of processing tasks.

15. The method of any preceding claim, wherein the method is for reducing processor cycles.

16. An application program stored on a computer readable storage media of a computing system, the computing system having a processor, the application program having instructions to cause the processor to perform the method of any preceding claim.

17. A cloud computing environment having a processor configured to perform the method of any of claims 1-15.
